(19) **Europäisches Patentamt**

**European Patent Office**

**Office européen des brevets**

(11) **EP 1 121 785 B1**

(12) **EUROPÄISCHE PATENTSCHRIFT**

(45) Veröffentlichungstag und Bekanntmachung des Hinweises auf die Patenterteilung:
**12.11.2003 Patentblatt 2003/46**

(21) Anmeldenummer: **99955771.3**

(22) Anmeldetag: **22.09.1999**

(51) Int Cl.⁷: **H04L 12/40**, H04L 12/46, H04L 12/26

(86) Internationale Anmeldenummer:
**PCT/DE99/03038**

(87) Internationale Veröffentlichungsnummer:
**WO 00/018064 (30.03.2000 Gazette 2000/13)**

(54) **NETZWERK SOWIE KOPPELGERÄT ZUR VERBINDUNG ZWEIER SEGMENTE IN EINEM DERARTIGEN NETZWERK**

NETWORK AND COUPLING DEVICE FOR CONNECTING TWO SEGMENTS IN SUCH A NETWORK

RESEAU ET APPAREIL DE COUPLAGE POUR LA CONNEXION DE DEUX SEGMENTS DANS UN TEL RESEAU

(84) Benannte Vertragsstaaten:
**AT DE FR GB IT**

(30) Priorität: **22.09.1998 DE 19843449**

(43) Veröffentlichungstag der Anmeldung:
**08.08.2001 Patentblatt 2001/32**

(73) Patentinhaber: **SIEMENS AKTIENGESELLSCHAFT**
**80333 München (DE)**

(72) Erfinder:
• **BRÜCKNER, Dieter**
**D-96199 Unterleiterbach (DE)**
• **SEITER, Jürgen**
**D-76530 Baden-Baden (DE)**
• **TREMEL, Michael**
**D-90439 Nürnberg (DE)**

(56) Entgegenhaltungen:
**US-A- 4 577 313**

• **STEWEN C: "OPTIMUM FIBER OPTIC NETWORKING FOR PROFIBUS" ENGINEERING AND AUTOMATION,DE,SIEMENS AKTIENGESELLSCHAFT, BERLIN, Bd. 17, Nr. 3/04, 1. Mai 1995 (1995-05-01), Seiten 13-14, XP000533392 ISSN: 0939-2068**

**Beschreibung**

Die Erfindung bezieht sich auf ein Netzwerk nach dem Oberbegriff des Anspruchs 1 sowie auf ein Koppelgerät zur Verbindung zweier Segmente in einem derartigen Netzwerk nach dem Oberbegriff des Anspruchs 16.

Netzwerke, in denen mehrere Teilnehmer zur Datenübertragung miteinander verbunden sind, sind bereits allgemein bekannt. Da ein Netzwerk mit nur einem Bus bezüglich Teilnehmeranzahl und Buslänge durch physikalische Gegebenheiten und logische Festlegungen beschränkt ist, wird das Netzwerk in mehrere Segmente unterteilt, die über Koppelgeräte, sogenannte Repeater, miteinander verbunden sind. Ein Koppelgerät wird beidseitig mit jeweils einem Transceiver an die Bussegmente angeschlossen und dient im wesentlichen zur bidirektionalen Signalregenerierung zwischen den beiden Segmenten. Zur Sicherung der Datenübertragung ist beispielsweise aus dem rtp-Seminar "Bussysteme" in "Regelungstechnische Praxis", 1984, Heft 2, Seiten S5 bis S8 bekannt, Telegramme mit Kontrollinformationen zu versehen. Ein Teilnehmer, der das Telegramm in das Netzwerk sendet, fügt diese Kontrollinformation dem Telegramm hinzu, während sie ein anderer Teilnehmer, der das Telegramm empfängt, mit einer selbstgebildeten Kontrollinformation vergleicht und bei Abweichungen einen Übertragungsfehler erkennt. Als eine Möglichkeit einer Kontrollinformation ist dort ein CRC-Wort angegeben (CRC = Cyclic Redundancy Check), das über das gesamte Telegramm gebildet wird. Eine Störung eines Segments des Netzwerkes führt zu gestörten Telegrammen beim Empfänger, die von diesem anhand der Kontrollinformationen als gestörte Telegramme erkannt werden können.

Sporadische Fehler auf einem Segment, welche die Übertragung eines Telegramms vortäuschen, werden ebenso wie gestörte Telegramme auf alle anderen Segmente des Netzwerks weitergeleitet. Störungen breiten sich somit im gesamten Netzwerk aus und nehmen unter Umständen einen großen Teil der Übertragungskapazität in Anspruch. Schlimmstenfalls kann durch Störeinkopplungen auf einem Segment das gesamte Netzwerk blockiert werden.

In dem Dokument US-A-4577313 ist ein Verfahren und eine Vorrichtung zum Schützen der Datenintegrität in einem mehrschleifigen Kommunikationsnetzwerk beschrieben. in jeder Brücke des Netzwerks wird die Einstellung bestimmter Steuerbits eines Rahmens geprüft, und abhängig davon wird eine Entscheidung getroffen, ob der Rahmen verworfen oder weitergeleitet wird. Aus dem Dokument STEWEN C: 'OPTIMUM FIBER OPTIC NETWOR-KING FOR PROFIBUS' ENGINEERING AND AUTOMATION,DE,SIEMENS AKTIENGESELLSCHAFT, BERLIN, Bd. 17, Nr. 3/04, 1. Mai 1995 (1995-05-01), Seiten 13-14, ISSN: 0939-2068, auf das sich der Oberbegriff des Anspruchs 1 bezieht, ist ein Netzwerk mit mehreren Teilnehmern nach dem PROFIBUS-Standard bekannt. Die Koppelgeräte des Netzwerks sind mit einer Echofunktion versehen, die die Weiterleitung von Daten auf ein Netzwerksegment vorübergehend sperrt, wenn auf diesem Segment kein Echo oder ein gestörtes Echo empfangen wurde.

Der Erfindung liegt die Aufgabe zugrunde, ein Netzwerk sowie ein Koppelgerät zur Verbindung zweier Segmente in einem derartigen Netzwerk zu schaffen, durch welches der Einfluß von Störungen auf die Leistungsfähigkeit des Netzwerks verringert wird.

Zur Lösung dieser Aufgabe weisen das neue Netzwerk und das neue Koppelgerät zur Verbindung zweier Segmente in einem derartigen Netzwerk die im kennzeichnenden Teil des Anspruchs 1 bzw. im kennzeichnenden Teil des Anspruchs 16 angegebenen Merkmale auf. In den Unteransprüchen sind vorteilhafte Weiterbildungen der Erfindung beschrieben.

Die Erfindung hat den Vorteil, daß dynamische Störungen, z. B. kurze Spikes, sowie Dauerstörungen, die auf ein Segment eines Netzwerks eingekoppelt werden, sich nicht vermindernd auf die Übertragungskapazität anderer Segmente desselben Netzwerks auswirken. Durch eine Segmentierung, bei welcher eine Weiterleitung gestörter Telegramme aus einem gestörten Segment in benachbarte Segmente gesperrt wird, wird in einfacher Weise eine Fortpflanzung von Störungen über mehrere Segmente hinweg unterbunden.

Zudem wird in vorteilhafter Weise durch die Erfindung bei Störung einer Übertragungsrichtung eines Segments die Entstehung einer unidirektionalen Verbindung auf dem Segment vermieden. Bei einer Abkopplung eines Segments, die in dem Netzabschnitt auf der einen Seite des gestörten Segments den

Empfang von Telegrammen aus dem Restnetz unterbindet, bildet sich auf diesem Netzabschnitt ein Datenverkehr, der asynchron zum Datenverkehr auf dem Restnetz, d. h. dem Netzabschnitt auf der anderen Seite des gestörten Segments, ist. Eine unidirektionale Verbindung über das gestörte Segment würde den Datenverkehr von dem Netzabschnitt auf der einen Seite des gestörten Segments auf das Restnetz übertragen und im Extremfall den Datenverkehr auf dem Restnetz zerstören. Das würde eine erhebliche Beschränkung der Leistungsfähigkeit des Netzwerks bedeuten. Durch die Erfindung werden somit Kollisionen von Telegrammen, die von Teilnehmern gesendet werden, die von der Sendetätigkeit anderer Teilnehmer wegen eines gestörten Segments nichts mehr hören, mit den Telegrammen der Teilnehmer im Restnetz vermieden. Es entstehen auf den beiden Seiten des gestörten Segments Netzabschnitte, auf welchen unabhängig voneinander eine Datenübertragung abgewickelt werden kann. Auf den beiden Netzabschnitten kann trotz des gestörten Segments eine Datenübertragung aufrechterhalten werden.

Wenn ein Koppelgerät nach Erkennen einer Störung auf einem Segment für eine vorgebbare Zeitdauer auch keine Telegramme in das gestörte Segment hineinsendet, kann ein anderes Koppelgerät, das sich an dem gestörten Segment befindet, in einfacher Weise anhand einer Überwachung von Sendeaktivitäten auf dem zweiten Segment erkennen, daß durch das eine Koppelgerät die Weiterleitung von Telegrammen gesperrt und eine Störung auf dem Segment erkannt wurde. Um eine unidirektionale Verbindung zu vermeiden, kann unmittelbar danach auch das andere Koppelgerät die Weiterleitung auf dem gestörten Segment empfangener Telegramme sperren. Ein besonderes Signal, mit welchem das eine Koppelgerät dem anderen die Sperre der Weiterleitung auf dem gestörten Segment empfangener Telegramme mitteilt, ist somit nicht erforderlich.

Damit ein Segment nicht bereits bei einzelnen, sporadischen Fehlern vom Netzwerk abgetrennt wird, ist es möglich, die Weiterleitung von Telegrammen erst nach Feststellen einer vorgebbaren Anzahl von gestörten Telegrammen zu verhindern.

Ein besonders einfach anwendbarer Überwachungsmechanismus wird erhalten, wenn die Mittel zur Erkennung einer Telegrammverfälschung derart ausgebildet sind, daß ein Fehler erkannt wird, wenn in einem empfangenen Telegramm ein Signalpegel länger als eine vorgebbare Zeit erhalten bleibt. In vorteilhafter Weise wird dabei ausgenutzt, daß bei allen Übertragungsprotokollen für Netzwerke nach bestimmten Zeiten Pegelwechsel erfolgen müssen.

Insbesondere bei PROFIBUS DP ist der Überwachungsmechanismus mit Vorteil anwendbar, indem ein Fehler erkannt wird, wenn in einem empfangenen Telegramm der Signalpegel für 13 Bitzeiten in Folge auf einem Low-Pegel bleibt. Bei PROFIBUS DP kann ein derartiges Zeichen wegen des Stop-Bits mit High-Pegel im ungestörten Fall nie vorkommen. Es muß demnach durch eine Störung verfälscht worden sein.

Weiterhin ist in einfacher Weise ein Überwachungsmechanismus anwendbar, bei welchem die Anzahl der in einem empfangenen Telegramm enthaltenen Zeichen mit einer vorgebbaren Maximalzahl verglichen wird. Die Anzahl der Zeichen in einem Telegramm ist praktisch bei allen Übertragungsprotokollen begrenzt und damit auf einen vorgebbaren Grenzwert überprüfbar. Insbesondere das PROFIBUS DP-Protokoll läßt nur Telegramme mit maximal 255 Zeichen zu, so daß ein Telegramm mit mehr als vorzugsweise 262 Zeichen nur bei einer Störung auftreten kann.

Eine zusätzliche Kontrollinformation, die ein erstes Koppelgerät, das ein Telegramm von einem ersten Segment auf ein zweites Segment weiterleitet, unabhängig von einer möglicherweise vorhandenen, auf dem ersten Segment gültigen Kontrollinformation einem auf das zweite Segment gesendeten Telegramm hinzufügt und die somit durch ein zweites, an das zweite Segment angeschlossenes Koppelgerät überprüfbar ist, hat den Vorteil, daß eine eindeutige Lokalisierung des Fehlerentstehungsorts bis zum gestörten Segment ermöglicht wird. Dabei kann die Ergänzung eines Telegramms um eine Kontrollinformation unabhängig von dem auf anderen Segmenten verwendeten Übertragungsprotokoll erfolgen. Auch Telegramme, die ohne eine aufwendige Kontrollinformation, beispielsweise nur mit einem Parity-Bit, wie bei PROFIBUS DP, auf dem ersten Segment übertragen wurden, werden auf dem zweiten Segment zur Erhöhung der Übertragungssicherheit um die zusätzliche Kontrollinformation ergänzt. Durch diese Überwachung der Übertragungsqualität werden gestörte Telegramme erkannt und können von einer Weiterverarbeitung ausgeschlossen werden. Bei nichtspeichernden Koppelgeräten, welche empfangene Telegramme unmittelbar auf dem gegenüberliegenden Segment wieder aussenden, setzt eine Ergänzung des Telegramms um eine Kontrollinformation voraus, daß eine Sendepause zwischen zwei Telegrammen größer ist als die Zeit, die zum Senden der Kontrollinformation benötigt wird. Da immer zwischen Telegrammen Sendepausen vorhanden sind, ist diese Bedingung ohne weiteres zu erfüllen.

In vorteilhafter Weise ist die Kontrollinformation gleichzeitig mit Empfang des Telegramms generierbar, wenn als Kontrollinformation ein CRC(Cyclic Redundancy Check)-Prüfzeichen verwendet und nach dem Ende des Telegramms auf das zweite Segment gesendet wird. Es entsteht somit in einem Koppelgerät keine Zeitverzögerung der Übertragung durch die Generierung einer Kontrollinformation für das jeweils empfangene Telegramm und den Vergleich mit der beim Telegramm empfangenen Kontrollinformation sowie durch die Generierung einer neuen Kontrollinformation für das gesendete Telegramm.

Als ein guter Kompromiß zwischen Sicherheit bei der Fehlererkennung und der zusätzlich erforderlichen Datenübertragungsmenge hat sich die Verwendung eines CRC-Prüfzeichens mit einer Länge von 5 Bit erwiesen. Insbesondere bei einem Feldbus nach Art des PROFIBUS DP ist ein derartiges CRC-Prüfzeichen mit Vorteil anwendbar.

Für ein sicheres Erkennen des Telegrammendes im Empfänger kann das Telegramm in einfacher Weise um ein zusätzliches Stop-Bit ergänzt werden, nach welchem unmittelbar die Kontrollinformation folgt. Dadurch kann eine Sendepause zwischen Telegramm und Kontrollinformation entfallen und es wird wenig zusätzliche Übertragungszeit für die Erweiterung des Telegramms um eine Kontrollinformation benötigt.

Wenn der Empfänger des Telegramms ein Koppelgerät ist, das für ein auf dem zweiten Segment empfangenes Telegramm eine Kontrollinformation erzeugt, die erzeugte Kontrollinformation mit einer empfangenen Kontrollinformation vergleicht und bei Abweichen der Kontrollinformationen einen Fehler anzeigt, so ist unmittelbar am Empfänger ablesbar, ob das Telegramm über das betreffende Segment korrekt übertragen wurde. Die Anzeige kann durch optische Mittel, beispielsweise eine LED, oder durch elektrische Mittel, beispielsweise indem ein Signal auf einen elektrischen Anschlußkontakt geführt ist, der mit einer Bedien- und Beobachtungsstation verdrahtet werden kann, erfolgen. Alternativ kann auch ein Telegramm zur Fehlermeldung generiert werden, das über das Netzwerk an eine zentrale Meldestation übertragen wird. Das setzt jedoch voraus, daß das Koppelgerät selbst eine Zugriffsberechtigung auf das Netzwerk erhält und am Netzwerk adressierbar ist.

Die Entstehung einer dauerhaften Sperre der Weiterleitung von Telegrammen über ein Koppelgerät kann bei sporadischen Fehlern vermieden werden, indem die Sperre aufgehoben wird, wenn eine Überprüfung der Übertragungsqualität auf dem zweiten Segment durch Sondertelegramme, die über das zweite Segment von dem ersten Koppelgerät zu dem zweiten Koppelgerät und umgekehrt übertragen werden, eine gute Übertragungsqualität ergibt.

Anhand der Zeichnungen, in denen Ausführungsbeispiele der Erfindung dargestellt sind, werden im folgenden die Erfindung sowie Ausgestaltungen und Vorteile näher erläutert.

Es zeigen:

Figur 1     ein Netzwerk mit elektrischer Signalübertragung auf drei Segmenten,
Figur 2     einen Ausschnitt eines Netzwerks mit teilweise elektrischer und optischer Signalübertragung,
Figur 3     einen Telegrammaufbau mit angehängtem CRC-Prüfzeichen,
Figur 4     ein Blockschaltbild eines Koppelgeräts,
Figur 5     ein Blockschaltbild eines Kanals eines Koppelgeräts,
Figur 6     ein Ablaufdiagramm einer Segmentabkopplung,
Figur 7     ein Ablaufdiagramm einer Segmentankopplung mit Übertragung von Sondertelegrammen und
Figur 8     ein Netzwerk mit der Struktur eines optischen Doppel-rings.

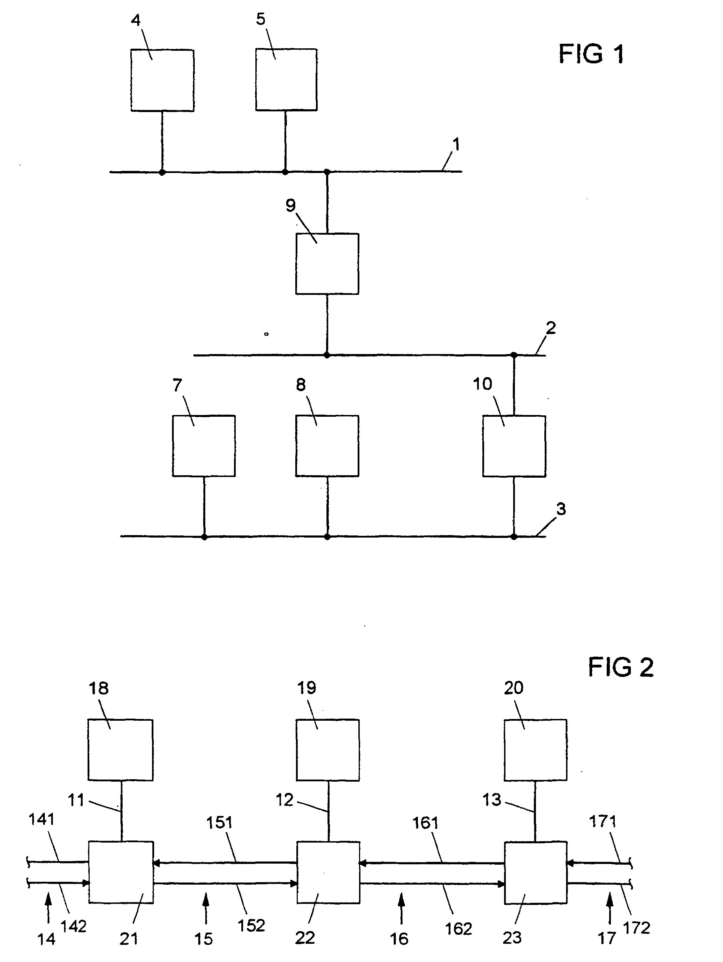

Das Netzwerk nach Figur 1 ist in drei Segmente 1, 2 und 3 unterteilt. An das Segment 1 sind Teilnehmer 4 und 5, an das Segment 3 sind Teilnehmer 7 und 8 angeschlossen. Die Segmente 1 und 2 sind durch einen Repeater 9 als ein erstes Koppelgerät, die Segmente 2 und 3 durch einen Repeater 10 als ein zweites Koppelgerät miteinander verbunden. Auf den Segmenten 1 und 3 wird eine Datenübertragung nach dem Protokoll des PROFIBUS DP abgewickelt. Telegramme, die von Segment 1 auf Segment 3 zu übertragen sind, werden in dem ersten Koppelgerät 9 mit einem CRC-Prüfzeichen versehen, das zur Überprüfung einer korrekten Übertragung des Telegramms über das Segment 2 im zweiten Koppelgerät 10 als Kontrollinformation gelesen und mit einem anhand des empfangenen Telegramms erzeugten CRC-Prüfzeichen verglichen wird. Die Weiterleitung des Telegramms auf das Segment 3, das nach dem Protokoll des PROFIBUS DP arbeitet, erfolgt durch das zweite Koppelgerät 10 ohne die in Segment 2 verwendete Kontrollinformation. Der Übersichtlichkeit wegen ist in Figur 1 ein Netzwerk mit lediglich drei Segmenten dargestellt. In der Praxis treten jedoch häufig Netzwerke mit einer erheblich größeren Anzahl Segmenten auf, so daß die Möglichkeit der Fehlerlokalisierung bis auf das gestörte Segment einen erheblichen Vorteil darstellt. In den Koppelgeräten 9 und 10 werden lediglich zwei Kanäle für Segmente mit elektrischer Signalübertragung benötigt, so daß weitere Kanäle der Koppelgeräte abgeschaltet werden können.

Das Netzwerk in Figur 2 enthält Segmente 11, 12 und 13, auf denen Daten mit elektrischen Signalen übertragen werden, sowie Segmente 14, 15, 16 und 17 mit optischer Übertragung. Es ist lediglich ein Ausschnitt des Netzwerks dargestellt. An den Segmenten 14 und 17 können sich weitere, der Übersichtlichkeit wegen nicht dargestellte Koppelgeräte oder Teilnehmer befinden. Teilnehmer 18, 19 und 20 sind durch die Segmente 11, 12 bzw. 13 mit Koppelgeräten 21, 22 bzw. 23 verbunden. Die Segmente 14, 15, 16 und 17 mit optischer Signalübertragung besitzen für jede Übertragungsrichtung einen Lichtwellenleiter. Für Segment 14 sind dies die Lichtwellenleiter 141 and 142, für Segment 15 die Lichtwellenleiter 151 und 152, für Segment 16 die Lichtwellenleiter 161 und 162 sowie für Segment 17 die Lichtwellenleiter 171 und 172. Die Segmente 11, 12 und 13 sind in diesem Ausführungsbeispiel nach der Spezifikation RS485 aufgebaut, und die Datenübertragung erfolgt gemäß dem Protokoll des PROFIBUS DP. Zur Sicherung der Datenübertragung wird demgemäß auf den Segmenten 11, 12 und 13 lediglich ein Parity-Bit verwendet. Auf den Segmenten 14, 15, 16 und 17 werden Telegramme übertragen, die jeweils um eine Kontrollinformation ergänzt sind, die aus einem CRC-Prüfzeichen mit 5 Bit Länge besteht.

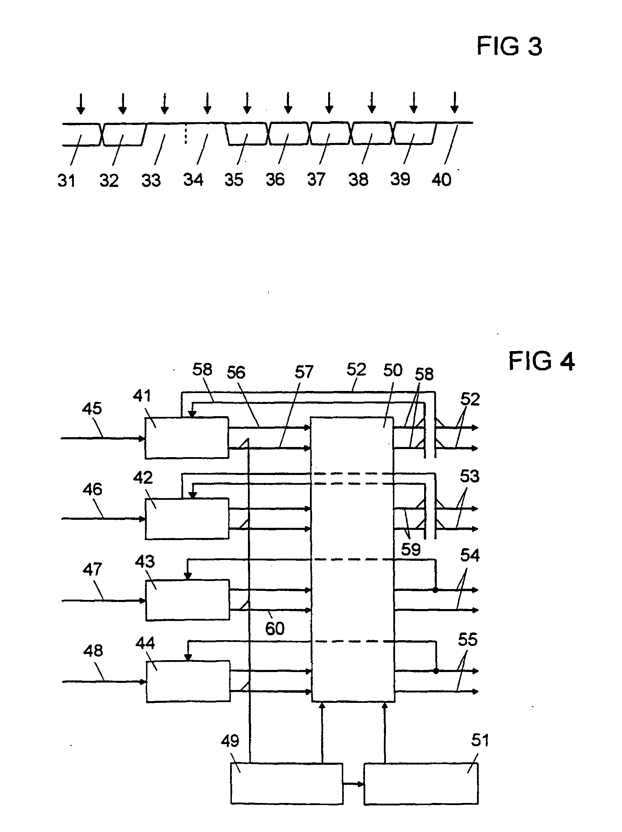

Figur 3 zeigt den Aufbau eines Telegramms mit angehängtem CRC-Prüfzeichen, wie es in den Netzwerken nach den Figuren 2 und 3 verwendet werden kann. Das Prüfzeichen wird dem Telegramm hinzugefügt, um dynamische Fehler, z. B. einen Wackelkontakt an einem optischen Stecker, eine kalte Lötstelle oder eine zu hohe Dämpfung eines Lichtwellenleiters, feststellen zu können und eine eindeutige Lokalisierung der Fehlerstelle zu erhalten. Durch diese Maßnahme wird die Übertragung eines Telegramms von einem Koppelgerät zu einem anderen, das den nächsten Empfänger des Telegramms darstellt, geprüft. In dem gezeigten Ausführungsbeispiel nach Figur 2 wird ein CRC-Prüfzeichen nur für die Segmente 14, 15, 16 und 17 mit optischer Signalübertragung generiert und im jeweils nächsten Empfänger überprüft. Bei Nichtübereinstimmung eines empfangenen CRC-Prüfzeichens mit einem in einem Koppelgerät generierten CRC-Prüfzeichen wird ein Fehlerzähler um Eins erhöht und bei Übereinstimmung um Eins erniedrigt. Wenn der Fehlerzähler einen vorgebbaren Grenzwert, vorzugsweise den Grenzwert 4, erreicht hat, wird eine Weiterleitung von Telegrammen aus dem gestörten Segment in benachbarte Segmente gesperrt. An den Segmenten 11, 12 und 13 mit elektrischer Signalübertragung nach der RS485-Spezifikation wird dagegen kein CRC-Prüfzeichen an die Telegramme angehängt. Damit ist auf diesen Segmenten keine Abweichung vom Protokoll gemäß PROFIBUS DP erforderlich.

In Figur 3 sind lediglich die letzten drei Bits, zwei DatenBits 31 und 32 sowie ein Stop-Bit 33, eines Telegramms dargestellt, das dem Protokoll gemäß PROFIBUS DP entspricht. Dem Stop-Bit 33 wird ein weiteres Stop-Bit 34 angehängt, dem fünf Bits 35 ... 39 eines CRC-Prüfzeichens folgen. Über den einzelnen Bits sind jeweils durch nach unten weisende Pfeile die Abtastzeitpunkte, zu denen im Empfänger der Signalwert abgetastet wird, angedeutet. Nach dem letzten Bit 39 herrscht für die Dauer der folgenden Sendepause Idle-Zustand entsprechend dem dargestellten Pegel 40.

Bei ungestörten Telegrammen kann das Telegrammende durch eine TLU (Telegrazamlängen-Unit) ermittelt werden. Bei gestörten Telegrammen kann dies bei einem Telegramm nach dem PROFIBUS DP-Protokoll evtl. durch die Störung ausgeschlossen werden. Damit das angehängte CRC-Prüfzeichen in jedem Fall ausgewertet werden kann und nicht als Teil des gestörten Telegramms fehlinterpretiert wird, muß jedoch das Ende des Telegramms auch bei Störungen sicher erkannt werden. In dem gezeigten Ausführungsbeispiel wird dazu zwischen dem Ende des Telegramms nach dem PROFIBUS DP-Protokoll und dem Beginn des CRC-Prüfzeichens ein zusätzliches Stop-Bit eingefügt. Anhand der somit vorhandenen zwei Stop-Bits 33 und 34 kann im Empfänger das Telegrammende eines beliebigen Telegramms, also auch eines gestörten, erkannt werden. Das Telegrammende wird daran erkannt, daß nach dem letzten Zeichen kein neues StartBit detektiert wird, sondern ein weiteres Stop-Bit folgt.

Das CRC-Prüfzeichen wird immer synchron zu den Telegrammzeichen angehängt. Deshalb wird ein begonnenes Zeichen auch bei Störungen auf elf Bitzeiten ergänzt und somit das Elf-Bit-Zeichenraster eines Telegramms nachgebildet.

Bereits elf Bitzeiten nach dem Ende eines ungestörten Telegramms kann auf demselben Segment bereits ein Antworttelegramm erscheinen. Damit der Empfänger eines Koppelgeräts nicht durch das CRC-Prüfzeichen zum Empfang eines Elf-Bit-Zeichens getriggert wird, ist eine Empfangssperre implementiert, die nach jedem Telegrammende einen Neustart einer RXD-Machine für die Dauer des CRC-Prüfzeichens verhindert.

In Figur 4 ist die grobe Struktur der Koppelgeräte 21, 22 und 23 in Figur 2 dargestellt. Für jedes an das Koppelgerät anschließbare Segment ist ein Kanal vorgesehen. Die beiden Kanäle 41 und 42 sind für eine optische Signalübertragung, die Kanäle 43 und 44 für eine elektrische Signalübertragung auf dem jeweiligen Segment ausgelegt. In dem Ausführungsbeispiel nach Figur 2 ist beispielsweise das Koppelgerät 22 derart verschaltet, daß die Signale des Lichtwellenleiters 152 des Segments 15 über nicht dargestellte Transceiver mit Leitungen 45 auf den Kanal 41, die Signale des Lichtwellenleiters 161 des Segments 16 über nicht dargestellte Transceiver mit Leitungen 46 auf den Kanal 42 und die elektrischen Leitungen des Segments 12 über nicht dargestellte Transceiver mit Leitungen 47 auf den Kanal 43 geführt sind. Der Kanal 44 wird nicht verwendet und kann zur Verminderung des Energieverbrauchs getrennt von den übrigen Kanälen 41, 42 und 43 abgeschaltet werden. An Leitungen 48 des Kanals 44 ist in diesem Beispiel kein Segment angeschlossen. Eine Pfadsteuerung 49 und eine Schaltmatrix 50 sorgen für die Verteilung eines empfangenen Telegramms auf die angeschlossenen Segmente. Sie aktivieren zu jedem Zeitpunkt nur einen der Kanäle 41 ... 44, der bis zum Ende des Telegramms ausgewählt bleibt. Das ist auch dann der Fall, wenn auf mehreren Kanälen gleichzeitig Signale eintreffen. Bei den Kanälen 43 und 44, die für eine elektrische Signalübertragung ausgelegt sind, wird ein empfangenes Signal auf allen Segmenten außer dem Segment, das mit dem gerade aktiven Empfangskanal verbunden ist, weitergesendet. Bei den Kanälen 41 und 42 für eine optische Signalübertragung kann durch eine Parametrierung festgelegt werden, ob ein empfangenes Signal zusätzlich auch auf dem Segment des gerade aktiven Empfangskanals zurückgesendet werden soll oder nicht. Ein Zurücksenden des empfangenen Telegramms auf dem Segment des gerade aktiven Empfangskanals entspricht der Bildung eines Echos. Solange die Datenrate des Telegramms noch nicht erkannt ist, unterbindet die Pfadsteuerung 49 die Weiterleitung empfangener Signale auf die angeschlossenen Segmente. Über in der Figur 4 nicht dargestellte Transceiver sind beispielsweise bei dem Koppelgerät 22 in Figur 2 an Leitungen 52, 53 und 54 der Lichtwellenleiter 151 des Segments 15, der Lichtwellenleiter 162 des Segments 16 bzw. die elektrischen Leitungen des Segments 12 (siehe dazu Figur 2) angeschlossen. An den Leitungen 55 befindet sich kein Segment. Die Signale, die auf den Leitungen 45 ... 48 geführt werden, werden üblicherweise mit RXD bezeichnet. Die Leitungen 52 ... 55 bestehen jeweils physikalisch aus zumindest zwei elektrischen Leitungen, welche für ein TXD- bzw. RTS-Signal vorgesehen sind. Zur Echoüberwachung in den Kanälen 41 und 42 sind die Leitungen 58 bzw. 59 vom Ausgang der Schaltmatrix 50 auf die Kanäle 41 bzw. 42 zurückgeführt. Die Signale auf den Leitungen 58 und 59 werden in den Kanälen 41 bzw. 42 ausgewertet und dann gegebenenfalls auf Leitungen 52 bzw. 53 gegeben.

Am Beispiel eines auf dem Segment 12 mit elektrischer Signalübertragung empfangenen Telegramms soll im folgenden die Funktionsweise der Pfadsteuerung 49 sowie der Schaltmatrix 50 erläutert werden. Die Pfadsteuerung 49 erkennt an einem von Kanal 43 gelieferten RTS-Signal auf einer Leitung 60, das aufgrund des Empfangssignals auf der Leitung 47 von Kanal 43 erzeugt wird, daß ein Telegramm von Segment 12 empfangen wird. Daraufhin wird die Schaltmatrix 50 durch die Pfadsteuerung 49 derart eingestellt, daß das empfangene Telegramm auf die Leitungen 58 und 59 geleitet wird. Da für das Segment 12 mit elektrischer Signalübertragung keine Echobildung eingestellt ist, erfolgt keine Weiterleitung des Telegramms auf die Leitungen 54. In den Kanälen 41 und 42 wird ein Zeichen zur Identifikation des Telegramms abgespeichert und das Telegramm auf Leitungen 52 bzw. 53 in die daran angeschlossenen Segmente 15 bzw. 16 ausgegeben. Wenn das vom benachbarten Koppelgerät 21 erzeugte Echo des auf die Leitungen 52 ausgegebenen Telegramms über Leitungen 45 von Kanal 41 empfangen wird, kann es anhand des abgespeicherten Zeichens zur Identifikation des Telegramms als Echo dieses Telegramms identifiziert werden und wird durch den Kanal 41 nicht mehr auf Leitungen 56 und 57 ausgegeben. In analoger Weise wird auch das vom benachbarten Koppelgerät 23 erzeugte Echo vom Netzwerk genommen.

Durch eine Slot-Zeit-Ermittlung 51 kann die Pause zwischen einem gesendeten Telegramm und dem Eintreffen eines Antworttelegramms ermittelt werden.

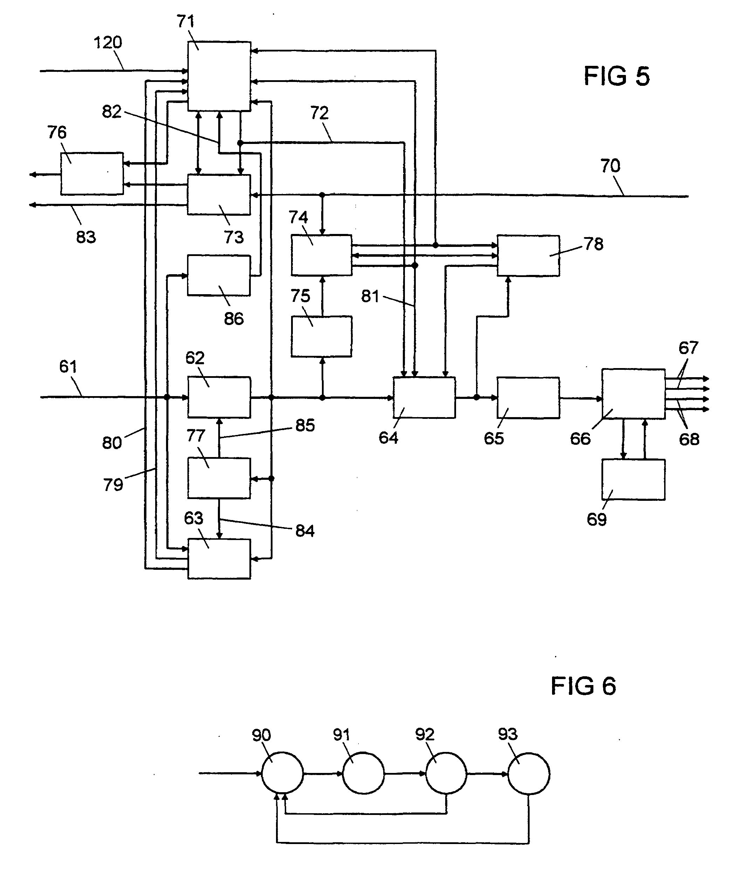

Figur 5 zeigt ein Blockschaltbild der Kanäle 41 und 42 aus Figur 4. Eine Leitung 61 führt ein Empfangssignal eines angeschlossenen Segments einer sogenannten RXD-Machine 62 und einem CRC-Check 63 zu. Am Beispiel des Kanals 41 in Figur 4 entspricht die Leitung 61 einer der Leitungen 45 in Figur 4. Über einen Schalter 64 und einen First-in/First-out(FIFO)-Speicher 65 wird das mit der RXD-Machine 62 regenerierte Signal einer sogenannten TXD-Machine 66 zugeführt, die zum einen ein RTS- und ein TXD-Signal auf Leitungen 67 und zum anderen ein RTS- und TXD-Signal auf Leitungen 68 erzeugt. Die Leitungen 67 und 68 sind in dem Blockschaltbild gemäß Figur 4 am Beispiel des Kanals 41 als Leitungen 56 bzw. 57 an die Schaltmatrix 50 angeschlossen. Auf den Leitungen 67 wird ein Telegramm ausgegeben, das durch einen CRC-Generator 69 um ein CRC-Prüfzeichen ergänzt wurde. Auf den Leitungen 68 wird das Telegramm ohne CRC-Prüfzeichen weitergeleitet, so daß das empfangene Telegramm unverändert ausgegeben wird und kompatibel zu einem Übertragungsprotokoll der an das jeweilige Segment angeschlossenen Teilnehmer ist. In diesem Ausführungsbeispiel werden die Leitungen 68 für die Weiterleitung des empfangenen Telegramms auf Segmente mit elektrischer Signalübertragung verwendet. Zur Echoüberwachung, d. h. zur Überwachung der Weiterleitung eines empfangenen Telegramms auf das Segment des gerade aktiven Empfangskanals, sind Leitungen 70 vorgesehen, die beispielsweise bei dem Kanal 41 in Figur 4 mit Leitungen 58 verbunden sind, auf welche die Schaltmatrix 50 das empfangene Telegramm weiterleitet. Der Ausgang eines UND-Gatters 76 ist am Beispiel des Kanals 41 in Figur 4 mit Leitungen 52 zur Übertragung des TXD-Signals verbunden. Ein RTS-Signal wird durch eine Leitung 83 unmittelbar von einem Schalter 73 auf die Leitungen 52 weitergegeben. Eine Segmentierlogik 71 steuert ein Sperren der Weiterleitung von gestörten Telegrammen auf die angeschlossenen Segmente und liefert dazu ein Sperrsignal auf einer Leitung 72 an den Schalter 73 und den Schalter 64.

Weitere Funktionsblöcke in Figur 5 sind eine Einrichtung 74 zum Telegrammanfangstest, ein Verzögerungsglied 75, eine Einrichtung 77 zur Telegrammlängenermittlung (TLU), eine Einrichtung 86 zum Activity-Check und eine Einrichtung 78 zur Ringüberwachung, deren Funktionen später näher erläutert werden.

Die Kanäle 43 und 44 sind prinzipiell ähnlich wie die Kanäle 41 und 42 aufgebaut. Es entfallen jedoch der CRC-Check 63, der Schalter 73 und Teile der Segmentierlogik 71, da ein CRC-Prüfzeichen und ein Austausch von Sondertelegrammen auf den Segmenten mit elektrischer Signalübertragung nach dem PROFIBUS DP-Protokoll nicht vorkommen.

Im folgenden wird zunächst die prinzipielle Funktionsweise eines Koppelgeräts am Beispiel des Koppelgeräts 22 in Figur 2 beschrieben. Ein beispielsweise auf dem Segment 15 mit optischer Signalübertragung empfangenes Telegramm wird zunächst auf die RXD-Machine 62 geleitet. RXD-Machine 62, FIFO-Speicher 65 und TXD-Machine 66 haben zusammen die Funktion eines Retimers, damit Verzerrungen des Empfangstelegramms sich nicht im Netzwerk fortpflanzen. Im Empfangszweig eines Kanals, in welchem ein CRC-Prüfzeichen als Kontrollinformation erwartet wird, wird das empfangene Telegramm zusätzlich auf den CRC-Check 63 (Figur 5) geführt, in welchem für das empfangene Telegramm ein CRC-Prüfzeichen gebildet und mit dem empfangenen CRC-Prüfzeichen verglichen wird. Durch die Einrichtung 77 zur Telegrammlängenermittlung wird der Start-Delimiter des empfangenen Telegramms ausgewertet und die Telegrammlänge ermittelt. Sie liefert an den CRC-Check 63 und die RXD-Machine 62 jeweils ein Signal auf Leitungen 84 bzw. 85, welches das Telegrammende anzeigt. Damit erkennt der CRC-Check 63, daß lediglich noch ein Stop-Bit 34 (Figur 3) sowie das CRC-Prüfzeichen folgen, und liest das dem empfangenen Telegramm beigefügte CRC-Prüfzeichen, das er zum Vergleich mit dem selbstgenerierten CRC-Prüfzeichen benötigt. Nach der Ausführung des Vergleichs wird das empfangene CRC-Prüfzeichen verworfen. Je nach Ergebnis des Vergleichs wird ein Fehlersignal auf einer Leitung 79 oder eine Gutmeldung auf einer Leitung 80 vom CRC-Check 63 an die Segmentierlogik 71 ausgegeben. Wenn die Schalter 64 und 73 geschlossen sind und wenn das empfangene Telegramm über die Schaltmatrix 50 (Figur 4) mit Leitungen 58 auf die Leitungen 70 (Figur 5) durchgeschleift wird, sendet Kanal 41 über Leitungen 52 auf dem Lichtwellenleiter 151 des Segments 15, der für eine Datenübertragung in der entgegengesetzten Richtung vorgesehen ist, das empfangene Telegramm mit einem im CRC-Generator 69 neu gebildeten CRC-Prüfzeichen als Kontrollinformation zurück. Auch in dem aktivierten Empfangskanal des Koppelgeräts 21, der das Echo-Telegramm empfängt, wird das CRC-Prüfzeichen überprüft, um Störungen auf dem Lichtwellenleiter 151 der entgegengesetzten Übertragungsrichtung zu erkennen. Im Empfangskanal des Koppelgeräts 21 ist der Schalter 64 geöffnet, damit das empfangene Echo-Telegramm den gleichzeitig ablaufenden Sendevorgang nicht stört. Wenn die Übertragung auf dem Segment 15 ungestört war, stimmt das neue CRC-Prüfzeichen mit dem verworfenen überein, andernfalls nicht. Auf die übrigen Ausgänge des Koppelgeräts wird je nach Einstellung der Schaltmatrix 50 durch die Pfadsteuerung 49, in welcher Übertragungsrichtungen voreinstellbar sind, ebenfalls das Telegramm gesendet, und zwar entsprechend dem jeweiligen Protokoll des angeschlossenen Segmentes, mit oder ohne ergänztem CRC-Prüfzeichen. In dem in Figur 2 dargestellten Ausführungsbeispiel wird auf das Segment 16 ein um das CRC-Prüfzeichen ergänztes Telegramm und auf das Segment 12 ein Telegramm ohne zusätzliches CRC-Prüfzeichen gesendet.

Durch die Schalter 64 und 73 in den Kanälen eines Koppelgeräts ist es weiterhin möglich, als Maßnahme einer Fehlerbehandlung ein gestörtes Segment aus dem Netzwerk abzukoppeln, damit Störungen nicht das gesamte Netzwerk belasten können. Die Störung kann somit vorteilhaft auf das gestörte Segment des Netzwerks eingegrenzt werden.

Auf den in Figur 2 dargestellten Segmenten 14 ... 17 mit optischer Signalübertragung sind Sende- und Empfangswege jeweils getrennt ausgeführt. Bei einer Abkopplung eines Segments, d. h. bei einer Unterbrechung der Weiterleitung von Telegrammen aus einem gestörten Segment über ein Koppelgerät in weitere an das Koppelgerät angeschlossene Segmente, werden in vorteilhafter Weise beide Übertragungsrichtungen gesperrt. Es werden somit beispielsweise bei einer Störung des Segments 15 nach der Abkopplung des Segments weder Telegramme vom Segment 15 in die Segmente 12 oder 16, noch Telegramme von den Segmenten 12 oder 16 in das Segment 15 übertragen. Das ist insbesondere dann von Vorteil, wenn in einer Reihe hintereinandergeschalteter Segmente, einer sogenannten optischen Linie, das letzte der Segmente mit optischer Signalübertragung gestört ist. Zur Erläuterung dieses Vorteils soll das Ausführungsbeispiel nach Figur 2 gedanklich dahingehend abgewandelt werden, daß das Segment 17 fehlt und somit Segment 16 das letzte Segment der optischen Linie ist. Tritt bei dem so erhaltenen Netzwerkaufbau auf dem Lichtwellenleiter 162 des Segments 16 eine Störung auf, so wird die Weiterleitung auf dem Segment 16 empfangener Telegramme auf das Segment 13 gesperrt. Ein aktiver Teilnehmer 20 empfängt daher am Segment 13, auf welchem eine Datenübertragung nach dem PROFIBUS DP-Protokoll abgewickelt wird, keine Telegramme mehr. Im Multimaster-Betrieb nach dem PROFIBUS DP-Protokoll beginnt ein Master, der keine Aktivitäten auf dem Netzwerk mehr feststellt, einen Token an sich selbst zu schicken und Abfragen nach weiteren Teilnehmern am Netzwerk durchzuführen. Das wird als Dauer-Token-Senden bezeichnet. Wenn nun trotz Sperren der Übertragungsrichtung von dem Segment 16 zum Segment 13 die Weiterleitung von Telegrammen in entgegengesetzter Richtung, also vom Segment 13 zum Segment 16, freigeschaltet bleiben würde, so würden die Token- und Abfragetelegramme des Teilnehmers 20 als Master in das gesamte Netzwerk eingespeist werden. Zudem wären diese Telegramme asynchron zu den Telegrammen des restlichen Netzwerks und würden diese zerstören, so daß im Extremfall auch eine Datenübertragung auf dem ungestörten Teil des Netzwerks unmöglich wäre. Um dies zu vermeiden, werden vorteilhaft bei einer Abkopplung eines Segments mit optischer Signalübertragung beide Übertragungsrichtungen gleichzeitig gesperrt. Beide Übertragungsrichtungen werden erst wieder freigeschaltet, wenn durch den Austausch von Sondertelegrammen über das abgekoppelte Segment die bidirektionale Funktionsfähigkeit des Segments festgestellt wurde.

Auf den Segmenten 11, 12 und 13 mit elektrischer Signalübertragung sind die beiden Übertragungsrichtungen nicht unabhängig voneinander betreibbar, da nur ein einziges Übertragungsmedium mit einer Fähigkeit zur bidirektionalen Übertragung verwendet wird. Der Fall, daß in der einen Richtung die Übertragung gestört wird und in der anderen Richtung nicht, ist in der Praxis daher äußerst selten. Ein gleichzeitiges Sperren beider Übertragungsrichtungen wird auf den Segmenten 11, 12 und 13 daher nicht durchgeführt. Beispielsweise können trotz einer Sperre der Weiterleitung auf dem Segment 12 mit elektrischer Signalübertragung empfangener Telegramme weiterhin durch das Koppelgerät 22 Telegramme in das gestörte Segment 12 gesendet werden, ohne eine Blockierung des Netzwerks befürchten zu müssen. Das hat den Vorteil, daß z. B. ein passiver Teilnehmer 19, der über ein gestörtes Segment 12 mit elektrischer Signalübertragung an das Netzwerk angeschlossen ist und seine Telegramme nur als Antworttelegramme auf vorhergehende Aufruftelegramme sendet, weiterhin Aufruftelegramme mithören kann. Bei einer gleichzeitigen Sperre beider Übertragungsrichtungen des Segments 12 durch das Koppelgerät 22 würde der passive Teilnehmer 19 keine Aufruftelegramme mehr empfangen und folglich auch keine Antworttelegramme mehr senden. Er wäre am Netzwerk nicht mehr erreichbar. Aufgrund der Abkopplung des Segments 12 ist die Weiterleitung auf dem Segment 12 empfangener Telegramme auf das Netzwerk zwar gesperrt. Die Aufruftelegramme auf dem Netzwerk erreichen jedoch den passiven Teilnehmer 19 und dessen Antworttelegramme können vorteilhaft zur Beurteilung der Übertragungsqualität auf dem Segment 12 durch das Koppelgerät 22 ausgewertet werden. Auf den Austausch von Sondertelegrammen zur Feststellung des Wegfalls einer Störung kann daher verzichtet werden, und das Segment 12 wird bereits wieder angekoppelt, wenn ungestörte Telegramme auf dem Segment 12 mit elektrischer Signalübertragung empfangen werden. Diese Vorgehensweise wird mit Vorteil auch bei den weiteren Segmenten 11 und 13 mit elektrischer Signalübertragung angewendet.

Eine sporadische Störung, beispielsweise auf dem Segment 12, führt daher zu einer Abkopplung des Segments für lediglich wenige Telegramme und trennt einen passiven Teilnehmer nicht über eine längere Zeit vom Netzwerk. Dadurch wird eine bessere Anpassung der Segmentierdauer an die Art der Störung erreicht: Bei einer sporadischen Störung wird das Segment bereits nach kurzer Zeit wieder angekoppelt, bei einer massiven Störung, beispielsweise einem Kabelbruch, bleibt die Abkopplung des Segments dauerhaft bestehen.

Der FIFO-Speicher 65 in Figur 5 dient zum Ausgleich von Bitzeitschwankungen, die beispielsweise infolge von Quarzungenauigkeiten bei der Datenübertragung entstehen können. Wenn vier Bits in den FIFO-Speicher 65 eingeschrieben sind, beginnt dieser mit der Ausgabe der ersten Bits. Die Speichertiefe des FIFO-Speichers 65 beträgt neun Bit.

Die TXD-Machine 66 liest die im FIFO-Speicher 65 abgelegten Bits starr im Abstand einer Bitzeit aus. Das RTS-Signal (request to send) steuert die Datenflußrichtung des Transceivers des jeweiligen Kanals und wird vier Bitzeiten vor dem ersten Startbit des Telegramms aktiv. Das RTS-Signal wird von der TXD-Machine 66 mit dem Ende des letzten Stop-Bits wieder inaktiv geschaltet.

Die Ringüberwachung 78 besteht aus einer Anzahl von Überwachungsmechanismen, die kreisende Telegramme, Telegrammfragmente oder Störeinkopplungen in einer Verschaltung von Koppelgeräten zu einem optischen Einfaserring oder zu einem optischen Doppelring erkennen und durch Unterbrechen des Ringes beseitigen können. Als optischer Einfaserring wird beispielsweise die Netzwerkstruktur in Figur 2 bezeichnet, die aufgrund der Echobildung z. B. auf dem Segment 16 mit den angeschlossenen Koppelgeräten 22 und 23 besteht. Ein optischer Doppelring wird durch Verbinden der Lichtwellenleiter 141 und 142 von Segment 14 mit den Lichtwellenleitern 171 bzw. 172 von Segment 17 erhalten.

Ein in der Ringüberwachung 78 realisierter Überwachungsmechanismus ist eine Low-Bit-Überwachung, die ein Fehlersignal ausgibt, wenn für 13 Bitzeiten in Folge das Datensignal auf aktivem Pegel, hier der Low-Pegel, steht. Bei gültigen Telegrammzeichen kann ein derartiges Zeichen wegen des Stop-Bits mit High-Pegel im ungestörten Fall nie vorkommen. Ursachen für eine derartige Störung können beispielsweise Fremdlichteinkopplung oder ein defektes Koppelgerät sein.

Ein weiterer Überwachungsmechanismus ist eine Sendezeitüberwachung, die ein Fehlersignal ausgibt, wenn in einem Telegramm mehr als 262 Zeichen gezählt werden. Das PROFIBUS DP-Protokoll begrenzt ein Telegramm auf maximal 255 Zeichen, so daß ein Telegramm mit mehr als 262 Zeichen nur bei einer Störung auftreten kann. Ursachen können hier ein defekter aktiver Teilnehmer an dem jeweiligen Segment oder eine dynamische Störeinkopplung auf das Segment sein.

Zudem wird als Überwachungsmechanismus eine Startbit- und Telegrammlängenüberprüfung durchgeführt. Ein Zähler wird um Zwei erhöht, wenn ein ungültiger Startdelimiter oder ein gültiger Startdelimiter mit dazu nicht passender Telegrammlänge erkannt wird. Der Zähler wird bei jedem fehlerfrei empfangenen Telegramm um Eins erniedrigt, bis er wieder den Zählerstand Null erreicht hat. Die Startbit- und Telegrammlängenüberprüfung gibt ein Fehlersignal aus, wenn der Zählerstand eine vorgebbare Zahl überschreitet. Damit werden Fehler erkannt, bei welchen das Telegramm durch einen defekten Teilnehmer oder eine Störeinkopplung verfälscht wurde.

Ein Wiederholfehlertest als ein weiterer Überwachungsmechanismus soll verhindern, daß ein formal gültiges Telegramm ewig in einem optischen Einfaserring kreist, wenn die Einrichtung 74 zum Telegrammanfangstest nicht mehr in der Lage ist, das Telegramm vom optischen Einfaserring zu entnehmen. Der Wiederholfehlertest enthält einen Zähler, der um Eins erhöht wird, wenn das zweite Zeichen eines gerade empfangenen Telegramms mit dem des vorhergehenden Telegramms übereinstimmt oder wenn ein Einzeichentelegramm empfangen wird. Bei Ungleichheit wird der Zähler auf Null gesetzt, ebenso, wenn ein Telegramm neu in den überwachten Einfaserring eingespeist wird. Im letzteren Fall ist auch die Einrichtung 74 zum Telegrammanfangstest wieder aktiv. Auch der Wiederholfehlertest gibt ein Fehlersignal aus, wenn der Zählerstand eine vorgebbare Zahl überschreitet. Durch den Wiederholfehlertest werden beispielsweise Störeinkopplungen in einen offenen Lichtwellenleiter oder in den Transceiver erkannt.

Der Schalter 64 unterbricht zur Echofilterung die Weiterleitung empfangener Telegramme und wird durch die Einrichtung 74 zum Telegrammanfangstest mit einem Signal auf einer Leitung 81 getriggert. In einem Fehlerfall, der durch die Ringüberwachung 78 erkannt wurde, kann der Schalter 64 auch durch die Ringüberwachung 78 geöffnet werden. Nur während auf dem Segment in Sende- und Empfangsrichtung Ruhezustand herrscht, wird der Schalter 64 wieder geschlossen.

Alle Überwachungsmechanismen können durch eine Parametrierung einzeln oder in Kombination miteinander aktiviert werden.

In einer Verschaltung von Koppelgeräten zu einem optischen Ring muß jeder optische Kanal die von ihm in den Ring eingespeisten Telegramme wieder vom Ring nehmen, damit keine ewig kreisenden Telegramme entstehen. Die Einrichtung 74 zum Telegrammanfangstest merkt sich daher von bis zu 32 gesendeten Telegrammen ein Zeichen, das dem optischen Kanal ermöglicht, die von ihm in den optischen Ring eingespeisten Telegramme wieder zu erkennen und durch Öffnen des Schalters 64, wie bereits oben beschrieben, vom Ring zu nehmen. Die empfangenen Telegramme werden ständig mit den gesendeten, bereits in der Einrichtung 74 zum Telegrammanfangstest gespeicherten Telegrammanfängen verglichen. Stimmt der empfangene Telegrammanfang mit dem ältesten Eintrag überein, so wird dieser gelöscht. Stimmt der Telegrammanfang nicht mit dem ältesten, sondern mit einem der jüngeren Einträge überein, so wird davon ausgegangen, daß die älteren Telegramme gestört wurden. In diesem Fall werden der übereinstimmende und alle älteren Einträge gelöscht. Die Einrichtung 74 zum Telegrammanfangstest sperrt durch Öffnen des Schalters 64 so lange das Weiterleiten von empfangenen Telegrammen, bis alle Einträge gelöscht sind und das Ende des Telegramms, dessen Anfang mit dem letzten Eintrag übereinstimmt, erreicht ist. Sollen mehr als 32 Einträge in der Einrichtung 74 zum Telegrammanfangstest gespeichert werden, wird von der Einrichtung 74 an die Ringüberwachung 78 ein Überlauf gemeldet. Die Ringüberwachung 78 unterbricht daraufhin das Senden und Empfangen von Telegrammen auf dem optischen Kanal für eine Ringumlaufzeit.

Durch das Verzögerungsglied 75, in welchem sich ein Schieberegister befindet, werden die empfangenen Telegramme nach der RXD-Machine 62 so verzögert, daß sie erst dann an der Einrichtung 74 zum Telegrammanfangstest eintreffen, wenn über die Leitung 70 eine Kennung des ursprünglichen Telegramms, zu welchem das empfangene Telegramm das Echo darstellt, in der Einrichtung 74 zum Telegrammanfangstest registriert wurde. In der Einrichtung 74 kann somit in jedem Fall die Reihenfolge eingehalten werden: erst ein Telegramm senden und die Kennung des Telegramms abspeichern, dann auf das Echo warten und anhand der Kennung als Echo erkennen.

Die Einrichtung 86 für einen Activity-Check überwacht Aktivitäten auf dem angeschlossenen Segment. Wenn für eine vorgebbare Zeitdauer keine Busaktivität festgestellt werden kann, wird dies durch ein Signal auf einer Leitung 82 der Segmentierlogik 71 gemeldet, die daraufhin eine Abkopplung des betreffenden Segments auslöst. Die Überwachung erfolgt mit einem Zähler, der bei jedem Signalwechsel auf der Leitung 61 zurückgesetzt wird und ansonsten kontinuierlich zählt. Bei Überschreiten eines vorgegebenen Zählerstandes wird das Meldesignal an die Segmentierlogik 71 ausgegeben und der Zählerstand zurückgesetzt. Bei der Festlegung der vorgebbaren Zeitdauer muß die maximal mögliche Signallaufzeit im Netzwerk zwischen den am weitesten entfernten Busteilnehmern beachtet werden, um die Netzwerkausdehnung durch eine zu kleine Zeitschwelle nicht zu begrenzen.

Jedes der folgenden Ereignisse kann also eine Abkopplung eines Segments auslösen:

1. Ein empfangenes CRC-Prüfzeichen ist nicht an das empfangene Telegramm angepaßt oder es tritt ein Stop-Bit-Fehler in einem empfangenen Telegrammzeichen auf,
2. der optische Signalpegel auf dem Lichtwellenleiter hat einen Mindestwert unterschritten; dies wird der Segmentierlogik 71 von einer Pegelmeßeinrichtung durch ein Signal 120 angezeigt,
3. der Speicher, der in der Einrichtung 74 zum Telegrammanfangstest vorgesehen ist, läuft bei mehr als 32 gesendeten Telegrammen, ohne ein gültiges Echo zu empfangen, über,
4. auf der Empfangsleitung 61 wird für eine vorgebbare Überwachungszeit keine Aktivität festgestellt oder
5. ein Überwachungsmechanismus der Ringüberwachung 78 erkennt Fehler in einem empfangenen Telegramm.

Der prinzipielle Ablauf einer Segmentabkopplung wird anhand des Ablaufdiagramms in Figur 6 am Beispiel einer Störung auf Segment 15 in Figur 2 erläutert. Nach einem Reset befindet sich die Ablaufsteuerung in einem Grundzustand 90, in welchem der Schalter 64 geschlossen ist. Wird durch ein Ereignis eine Segmentabkopplung veranlaßt, so wird zunächst der Grundzustand 90 verlassen und in einen Wait-Zustand 91 übergegangen, in welchem der Schalter 64 geöffnet und eine Weiterleitung von empfangenen Telegrammen auf angeschlossene Segmente 12 und 16 gesperrt wird. Es erfolgt eine Fehleranzeige, eine Fehlermeldung über den Meldekontakt erfolgt noch nicht. In dem Wait-Zustand 91 wird eine vorgebbare Mindestsegmentierdauer abgewartet, die vorzugsweise größer ist als die Zeitschwelle eines Timers in der Einrichtung für Activity-Check, der Sendepausen auf dem angeschlossenen Segment überwacht und bei Überschreiten eine Segmentabkopplung auslöst. Damit ist sichergestellt, daß das benachbarte Koppelgerät, in dem Ausführungsbeispiel nach Figur 2 das zum Koppelgerät 22 benachbarte Koppelgerät 21, ebenfalls eine Segmentabkopplung ausgelöst hat, d. h. ebenfalls eine Weiterleitung von dem Segment 15 empfangener Telegramme auf die anderen angeschlossenen Segmente 11 und 14 sperrt, bevor in einem Zustand 92 Sondertelegramme zur Überprüfung des Segments 15 ausgetauscht werden. Die Sondertelegramme werden in der Segmentierlogik 71 (Figur 5) erzeugt und über das UND-Gatter 76 sowie einen nicht dargestellten Transceiver auf das Segment 15 gesendet. Der Zustand 92 wird als First-Check bezeichnet. Je länger die Wartezeit im Zustand 91 ist, desto geringer ist der Einfluß niederfrequenter dynamischer Störungen auf das Netzwerk. Andererseits bestimmt die Wartezeit bei linienförmig mit Koppelgeräten hintereinandergeschalteten Segmenten, wie lange nach einer Störung die Linie mindestens unterbrochen ist.

Bei abgekoppeltem Segment 15 sind die Schalter 64 und 73 geöffnet. Es wird somit kein Echo gebildet und die Weiterleitung empfangener Telegramme gesperrt. Die RXD-Machine 62, die Einrichtung 77 zur Telegrammlängenermittlung und der CRC-Check 63 bleiben jedoch weiter aktiv, um eine Beurteilung der Übertragungsqualität anhand empfangener Telegramme durchzuführen und der Segmentierlogik 71 das Ergebnis der Beurteilung über die Leitungen 79 und 80 mitzuteilen.

Im Wait-Zustand 91 wird bereits auf empfangene Sondertelegramme reagiert und der Wait-Zustand 91 verlassen, um auf Sondertelegramme des benachbarten Koppelgeräts 21, das sich selbst bereits im First-Check-Zustand 92 befindet, reagieren zu können. Nach Empfang eines Sondertelegramms werden 22 Bitzeiten abgewartet, die einem Einhalten des Telegramm-Mindestabstands von elf Bitzeiten und einem Beenden eines evtl. gerade begonnenen Zeichens entsprechen, bevor das erste Sondertelegramm im First-Check-Zustand 92 gesendet wird.

Wie bereits oben beschrieben, kann eine Ursache der Segmentabkoppiung sein, daß ein Timer zur Überwachung von Sendeaktivitäten auf dem Segment eine vorgebbare Maximalruhezeit überschritten hat. Ursachen dafür können wiederum ein Bruch des Lichtwellenleiters oder ein Ausfall des benachbarten Koppelgeräts sein. Eine weitere Möglichkeit für das Ansprechen dieser Zeitüberwachung ist das Ausschalten aller aktiver Teilnehmer am Netzwerk. Das getrennte Segment kann demnach bei einer Überschreitung der maximalen Ruhezeit in Ordnung oder auch gestört sein. Vor einer Ausgabe einer Fehlermeldung wird deshalb das betreffende Segment durch Austauschen von Sondertelegrammen im First-Check-Zustand 92 geprüft. Schlägt dieser erste Versuch, Sondertelegramme fehlerfrei auszutauschen, fehl, so wechseln die an das Segment angeschlossenen Koppelgeräte in einen Cyclic-Check-Zustand 93, in welchem sie zyklisch versuchen, Sondertelegramme zu übertragen, und gleichzeitig zur Fehleranzeige eine LED und einen Meldekontakt aktivieren. Der Meldekontakt kann mit einer Bedien- und Beobachtungsstation zur Erzeugung einer Fehlermeldung verdrahtet werden. Durch diese Maßnahme wird eine automatische Visualisierung einer Störung ermöglicht. Bei einer fehlerfreien Übertragung von Sondertelegrammen in beiden Richtungen wird in den Grundzustand 90 gewechselt und das Segment 15 wieder automatisch an das Netzwerk angekoppelt. Durch die Sondertelegramme wird ein Hand-Shake-Verfahren realisiert, das eine gleichzeitige Aufhebung der Sperren in beiden Koppelgeräten 21 und 22 am Segment 15 sicherstellt.

In vorteilhafter Weise wird dadurch vermieden, daß zu gewissen Zeiten lediglich eine Übertragungsrichtung aktiviert ist. Das Segment läßt somit bereits unmittelbar nach Ankoppeln eine bidirektionale Übertragung zu. Falls danach kein Datenverkehr auf dem Segment herrscht, spricht wieder der Timer zur Überwachung der maximalen Ruhezeit an, und es wird erneut ein Austausch von Sondertelegrammen veranlaßt, ohne eine Fehlermeldung auszugeben. Der Austausch von Sondertelegrammen im First-Check-Zustand 92 wird durch eine blinkende Leuchtdiode angezeigt und dient somit als Betriebsanzeige, solange kein Datenverkehr auf dem Segment 15 herrscht. Dagegen wird im Cyclic-Check-Zustand 93 ein Fehler durch Dauerleuchten der Leuchtdiode angezeigt und eine Fehlermeldung über den Meldekontakt gegeben. Die Segmentabkopplung wird in diesem Zustand beibehalten. In vorgebbaren zyklischen Abständen werden im Cyclic-Check-Zustand 93 Sondertelegramme auf das gestörte Segment gesendet und eine Überprüfung durchgeführt. Bei korrekter Übertragung der Sondertelegramme wird vom Cyclic-Check-Zustand 93 wieder in den Grundzustand 90 zurückgekehrt und die Fehlermeldung zurückgenommen. Zur Realisierung des Hand-Shake-Verfahrens mit Sondertelegrammen wurden zwei Sondertelegramme ST1 und ST2 eingeführt, die bis Wiederankopplung des Segments zyklisch gesendet werden. Die Sondertelegramme weichen von den Nutztelegrammen, die im Netzwerk übertragen werden, ab, damit sie nicht als solches interpretiert werden können. Zudem wird bei den Sondertelegrammen ein Paritätsbit mit einer gegenüber dem Paritätsbit bei Nutztelegrammen umgekehrten Polarität für die Telegrammzeichen benutzt. Das Sondertelegramm ST1 dient zur zyklischen Einleitung einer Überprüfung des Segments, während das Sondertelegramm ST2 als Bestätigung für eine korrekte Telegrammübertragung gesendet wird. Die Sondertelegramme sind zur Überprüfung der Übertragungsqualität mit einem CRC-Prüfzeichen versehen.

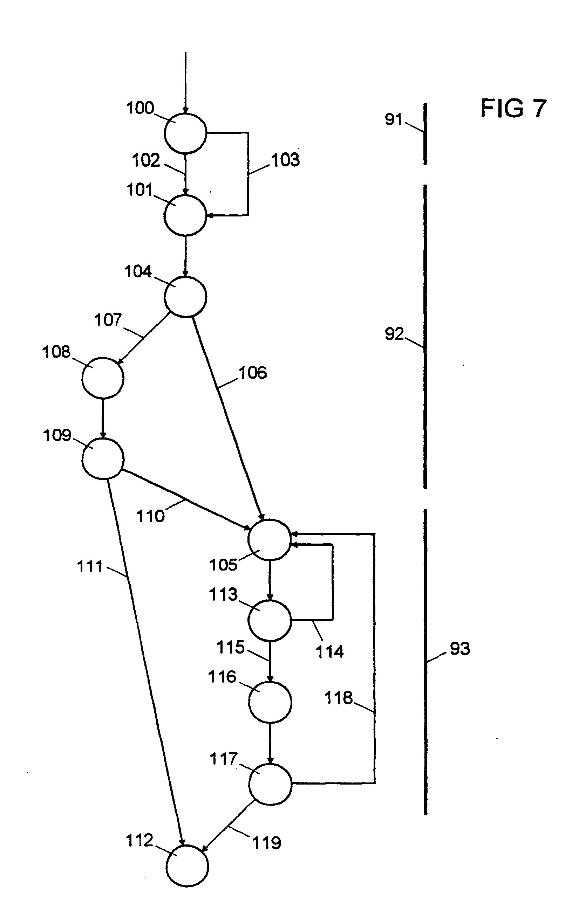

Das Ablaufdiagramm in Figur 7 verdeutlicht das Verfahren einer Segmentankopplung mit Übertragung von Sondertelegrammen. Durch senkrechte Linien an der rechten Seite in Figur 7 sind die vertikalen Bereiche, die dem Wait-Zustand 91, dem First-Check-Zustand 92 und dem Cyclic-Check-Zustand 93 in Figur 6 entsprechen, markiert.

Nach Abkoppeln eines Segments wird in einen Zustand 100 übergegangen, in welchem ein Timer zur Überwachung einer Mindestsegmentierzeit gestartet wird. Ist der Timer abgelaufen, so wird in einen Zustand 101 gewechselt und ein Sondertelegramm ST1 gesendet. Der Ablauf des Timers ist durch einen Zustandsübergangspfeil 102 markiert. In den Zustand 101 wird entsprechend einem Pfeil 103 ebenfalls eingetreten, wenn ein Sondertelegramm ST1 oder ein Sondertelegramm ST2 empfangen wurde. Nach dem Senden eines Sondertelegramms ST1 im Zustand 101 wird der Timer zur Überwachung der Mindestsegmentierzeit zurückgesetzt und beim Wechsel in einen Zustand 104 erneut gestartet. Wird von dem am Segment benachbarten Koppelgerät bis zum Ablauf des Timers kein Sondertelegramm ST1 oder ST2 empfangen, so wird in den Zustand 105 übergegangen, wie es durch einen Pfeil 106 angedeutet ist, und erneut ein Sondertelegramm ST1 gesendet. Wurde dagegen vor Ablauf des Timers im Zustand 104 ein Sondertelegramm ST1 empfangen, so findet entsprechend einem Pfeil 107 ein Übergang in einen Zustand 108 statt, in welchem ein Sondertelegramm ST2 gesendet wird. Der Timer wird danach zurückgesetzt und in einem Folgezustand 109 erneut gestartet. Wird in dem Zustand 109 während des Timer-Ablaufs auf das gesendete Sondertelegramm ST2 kein Antworttelegramm vom benachbarten Koppelgerät empfangen, so wird entsprechend einem Pfeil 110 in den Zustand 105 gewechselt, der den Beginn des Cyclic-Check darstellt. Ist dagegen ein von einem benachbarten Koppelgerät gesendetes Sondertelegramm ST2 innerhalb der Überwachungszeit eingetroffen, so bedeutet dies, daß Empfangs- und Sendepfad des Segments in Ordnung sind, und es wird entsprechend einem Pfeil 111 in einen Zustand 112 übergegangen, in welchem das Segment wieder angekoppelt wird, d. h., das Weiterleiten empfangener Telegramme auf benachbarte Segmente wird freigeschaltet. Im Zustand 105, der nach Ablauf des Timers eingenommen wurde, sendet das Koppelgerät erneut ein Sondertelegramm ST1 auf das gestörte Segment. Danach wird ein Zyklus-Timer rückgesetzt und in einen Zustand 113 übergegangen, in welchem der Ablauf des Zyklus-Timers überwacht wird. Die Überwachungszeit des Zyklus-Timers legt die Zyklusdauer fest, mit welcher Sondertelegramme auf das Segment ausgesendet werden. Ist die Zyklusdauer ohne Empfang eines Sondertelegramms abgelaufen, so wird entsprechend einem Pfeil 114 wieder in den Zustand 105 zurückgegangen. Wurde dagegen ein von einem benachbarten Koppelgerät gesendetes Sondertelegramm ST1 empfangen, so findet entsprechend einem Pfeil 115 ein Übergang in einen Zustand 116 statt, in welchem ein Sondertelegramm ST2 an das benachbarte Koppelgerät gesendet wird. Danach wird der Zyklus-Timer zurückgesetzt und in einem Zustand 117 erneut der Ablauf des Zyklus-Timers überwacht. Läuft der Zyklus-Timer ab, ohne daß ein Sondertelegramm ST2 empfangen wurde, wird entsprechend einem Pfeil 118 wiederum in den Zustand 105 zurückgegangen. Ein Empfang eines von einem benachbarten Koppelgerät gesendeten Sondertelegramms ST2 in dem Zustand 117 bedeutet, daß Empfangs- und Sendepfad des Segments wieder in Ordnung sind, und es wird entsprechend einem Pfeil 119 in den Zustand 112 übergegangen, in welchem der Cyclic-Check beendet ist und das Segment wieder angekoppelt wird. Der Zustand 112 entspricht dem Grundzustand 90 in Figur 6.

Durch das dargestellte Hand-Shake-Verfahren mit Sondertelegrammen ST1 und ST2 wird automatisch in einfacher Weise ein gestörtes Segment nach dem Wegfall der Störungen wieder angekoppelt.

Segmente, die einem bestimmten Protokoll, beispielsweise nach PROFIBUS DP, genügen müssen, das keine Sondertelegramme zuläßt, werden ohne ein derartiges Hand-Shake-Verfahren wieder freigegeben. Im Ausführungsbeispiel nach Figur 2 sind die Segmente 11, 12 und 13 derartige Segmente. Hier wird durch das jeweilige Koppelgerät im Fehlerfall ebenfalls das gestörte Segment abgekoppelt, d. h. die Weiterleitung von Telegrammen gesperrt, die auf dem jeweils gestörten Segment 11, 12 oder 13 empfangen wurden. Der FIFO-Speicher des Retimers wird gelöscht. Nachdem eine parametrierbare Mindestsegmentierzeit abgelaufen ist, wird ein Überwachungstimer und ein Telegrammzähler gestartet. Wenn das Segment abgekoppelt ist, bleibt das Senden in das gestörte Segment freigeschaltet. um die Bildung von Teilnetzen zu verhindern, die - wie bereits oben beschrieben - beispielsweise eine Doppel-Token-Bildung zur Folge haben könnte. Die Weiterleitung von beispielsweise auf den Segmenten 15 oder 16 empfangenen Telegrammen auf das Segment 12 bleibt also auch bei einem gestörten Segment 12 bestehen und ist unabhängig davon, ob die Weiterleitung von Telegrammen in entgegengesetzter Richtung gesperrt ist. Überwachungsmechanismen prüfen das Empfangssignal des gestörten Segments. Bei jedem Signalempfang wird der Überwachungstimer zurückgesetzt und neu gestartet. Werden innerhalb der Überwachungszeit keine weiteren Telegramme empfangen, so sind vermutlich keine Teilnehmer an dem Segment angeschlossen, und es wurde auf eine temporäre Störeinkopplung getriggert. Das Segment kann deshalb wieder angekoppelt werden. Wenn jeweils vor Ablauf der Überwachungszeit eine vorgebbare Anzahl fehlerfreier Telegramme in Folge empfangen wurde, so wird das Segment wieder angekoppelt, sobald auf dem Segment in Sendeund in Empfangsrichtung Ruhezustand herrscht.

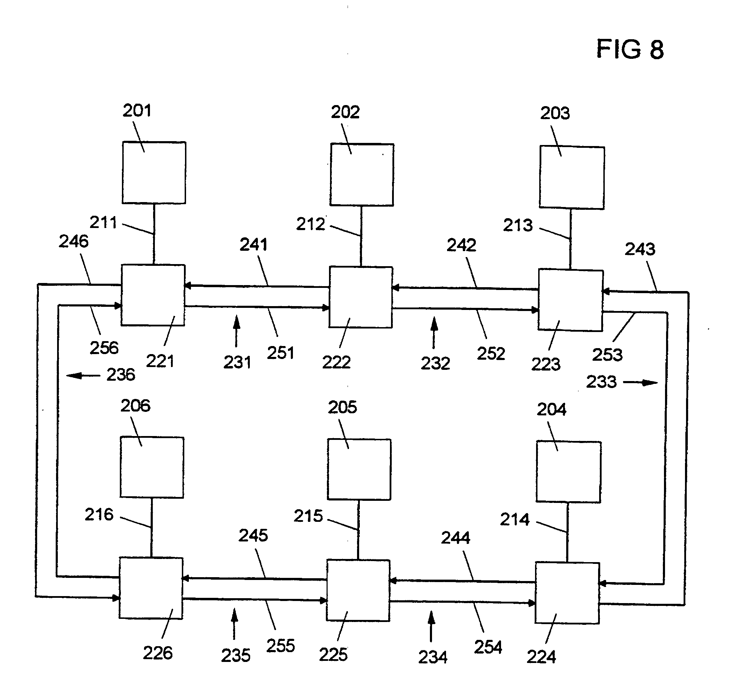

Anhand des Ausführungsbeispiels in Figur 8 soll im folgenden eine Möglichkeit beschrieben werden, durch Verschaltung der Komponenten zu einem optischen Doppelring eine höhere Verfügbarkeit des Netzwerks zu erhalten. In dem gezeigten Netzwerk sind Teilnehmer 201 ... 206 jeweils durch Segmente 211 ... 216 mit elektrischer Signalübertragung, auf welchen Daten nach dem PROFIBUS DP-Protokoll übertragen werden, an Koppelgeräte 221 ... 226 angeschlossen. Die Koppelgeräte 221 ... 226 sind paarweise durch Segmente 231 ... 236 mit optischer Signalübertragung miteinander verbunden, so daß ein optischer Doppelring entsteht, wie er in Figur 8 dargestellt ist. Die Segmente 231 ... 236 besitzen für jede Übertragungsrichtung unabhängig voneinander betreibbare Lichtwellenleiter 241 ... 246 bzw. Lichtwellenleiter 251 ... 256. Die Koppelgeräte 221 ... 226 überwachen die Segmente 211 ... 216 sowie 231 ... 236 auf Störungen und koppeln gestörte Segmente ab, wie es bereits anhand des in Figur 2 gezeigten Netzwerks beschrieben wurde. Bei Abkoppeln eines gestörten Segments, beispielsweise des Segments 236 in Figur 8, entsteht aus dem ursprünglichen optischen Doppelring eine optische Linie, in welcher die Teilnehmer 201 ... 206 weiterhin erreichbar sind. Damit wird die Verfügbarkeit des Netzwerks erhöht. Durch Austausch von Sondertelegrammen zwischen den Koppelgeräten, im Beispiel eines gestörten Segments 236 zwischen den Koppelgeräten 221 und 226, wird auf die bereits oben beschriebene Weise ein Wegfall der Störung erkannt und das Segment 236 nach Wegfall der Störung erneut an das Netzwerk angekoppelt. Nach Behebung der Störung ist somit die optische Linie wieder zu einem optischen Doppelring geschlossen.

Das Funktionsprinzip des optischen Doppelrings besteht darin, daß Telegramme, die von einem Teilnehmer über ein Segment mit elektrischer Signalübertragung eingespeist werden, durch das Koppelgerät gleichzeitig in beide angeschlossene Segmente mit optischer Signalübertragung weitergeleitet werden. Beispielsweise wird ein Telegramm, das der Teilnehmer 201 über das Segment 211 an das Koppelgerät 221 sendet, durch das Koppelgerät 221 sowohl mit dem Lichtwellenleiter 251 des Segments 231 an das Koppelgerät 222 als auch mit dem Lichtwellenleiter 246 des Segments 236 an das Koppelgerät 226 weitergeleitet. Es erfolgt somit eine Duplizierung des durch den Teilnehmer 201 gesendeten Telegramms. Die beiden umlaufenden, völlig identischen Telegramme werden anschließend von dem Koppelgerät 224, an welchem sie sich laufzeitbedingt treffen, als identische Telegramme erkannt und vom optischen Doppelring genommen. Dazu dient die Einrichtung 74 (siehe Figur 5) zum Telegrammanfangstest, die ein Zeichen zur Identifikation gesendeter Telegramme abspeichert, um, wie es bereits oben beschrieben wurde, ewig kreisende Telegramme zu verhindern. Durch die beschriebenen Mechanismen werden die entgegengesetzt umlaufenden Telegramme auch dann vom optischen Doppelring genommen, wenn sich die beiden Telegramme in einem Segment mit optischer Signalübertragung, also nicht unmittelbar an einem Koppelgerät, treffen.

Wenn das Segment 236 wegen Störungen durch die Koppelgeräte 221 und 226 abgekoppelt wurde, wird ein Telegramm des Teilnehmers 201 durch das Koppelgerät 221 lediglich auf Segment 231 weitergeleitet und somit nicht dupliziert. Vor einem Wiederankoppeln eines gestörten Segments mit optischer Signalübertragung kann es zudem vorkommen, daß von den beiden identischen, im optischen Doppelring in entgegengesetzter Richtung umlaufenden Telegrammen einige an dem Koppelgerät, das eine Weiterleitung von Telegrammen auf das gestörte Segment sperrt, ausgelöscht werden, während die Telegramme, welche eine längere Laufzeit zu dem an dem gestörten Segment gegenüberliegenden Koppelgerät haben, noch unterwegs sind. In diesem Fall ist das Gleichgewicht identischer, in entgegengesetzten Richtungen umlaufender Telegramme gestört. Würde bei einem Ungleichgewicht umlaufender Telegramme ein gestörtes Segment nach Wegfall der Störung erneut angekoppelt, so können kreisende Telegramme im optischen Doppelring entstehen, die zwar erkannt und beseitigt werden können, bis zu ihrer Beseitigung aber das gesamte Netzwerk stören.

Eine in einfacher Weise anwendbare Möglichkeit zur Vermeidung der Entstehung solcher kreisender Telegramme ist die Freischaltung eines Segments nach Wegfall der Störung zu einem Zeitpunkt, zu welchem keine Telegramme auf dem Netzwerk unterwegs sind. In einem Netzwerk mit Teilnehmern, die einen Datenverkehr nach dem PROFIBUS DP-Protokoll abwickeln, liegt dieser Zustand mit Sicherheit wenig später vor, wenn ein aktiver Teilnehmer an einen im Netzwerk nicht vorhandenen Teilnehmer eine sogenannte GAP-Abfrage gerichtet hat. Bei PROFIBUS DP führen aktive Teilnehmer mit GAP-Abfragen zyklisch Überprüfungen durch, ob neue Teilnehmer an das Netzwerk angeschlossen wurden und am Datenverkehr teilnehmen wollen. Bei jeder GAP-Abfrage wartet der abfragende Teilnehmer auf eine Antwort, mit welcher sich der neue Teilnehmer, sofern er zwischenzeitlich an das Netzwerk angeschlossen wurde, meldet. Erhält der abfragende Teilnehmer innerhalb einer vorgebbaren Zeit, der sogenannten Slot-Zeit, keine Antwort, so geht er davon aus, daß der abgefragte Teilnehmer nicht am Netzwerk erreichbar ist. Die Slot-Zeit wird dabei so bemessen, daß sie größer als die längstmögliche Zeitverzögerung zwischen Abfrage- und Antworttelegramm ist. Sie ergibt sich aus der Summe der Laufzeiten des Abfragetelegramms zum abgefragten Teilnehmer sowie des Antworttelegramms zum abfragenden Teilnehmer zwischen am weitesten zueinander entfernten Teilnehmern zuzüglich einer Antwortverzögerung des abgefragten Teilnehmers und eines Sicherheitszuschlags.

Die Koppelgeräte 221 ... 226 benötigen für bestimmte Überwachungsmechanismen, z. B. für die Festlegung der Überwachungszeit in der Einrichtung 86 (siehe Figur 5) für den Activity-Check, Informationen über die Netzwerkausdehnung. Eine Möglichkeit, um den Koppelgeräten diese Informationen mitzuteilen, wäre eine Parametrierung über das Netzwerk. Diese Möglichkeit wäre aber mit einem hohen Aufwand verbunden, da das Koppelgerät bei der Projektierung des Netzwerks als eigener, adressierbarer Teilnehmer erscheinen müßte. Eine weitere Möglichkeit wäre es, die Netzwerkausdehnung an den Koppelgeräten manuell einstellbar oder einlesbar zu machen. Diese Möglichkeit wäre aber fehleranfällig und mit einem hohen Aufwand bei der Installation des Netzwerks verbunden. Weiterhin könnte die Netzwerkausdehnung in den Koppelgeräten durch einen Default-Wert voreingestellt werden, der aber für die maximal zulässige Netzwerkausdehnung ausgelegt sein müßte und bei dem jeweiligen Anwendungsfall in einem Netzwerk unnötig hoch bemessen wäre.

In vorteilhafter Weise wird durch die Koppelgeräte 221 ... 226 die Slot-Zeit während des Betriebs des Netzwerks gemessen. Die Slot-Zeit enthält Informationen über die Netzwerkausdehnung, so daß eine aufwendige Parametrierung der Koppelgeräte bezüglich der Netzwerkausdehnung entfallen kann. Die Slot-Zeit $T_S$ wird in den Teilnehmern folgendermaßen parametriert:

$$T_S = T_{SM} + 2 \left( L_{ges} \cdot 5 \, \frac{\mu s}{km} + 2 \, N_K \cdot V_K + Tsdx + 20 \, T_{Bit} \right)$$

mit

$T_S$ - Slot-Zeit,
$T_{SM}$ - ein Sicherheitszuschlag,
$L_{ges}$ - Summe der Längen der Segmente mit optischer Signalübertragung,
$N_K$ - Anzahl der Koppelgeräte,
$V_K$ - Signallaufzeit durch ein Koppelgerät,
Tsdx - maximal mögliche Verzögerungszeit, nach der ein aufgerufener Teilnehmer auf ein Aufruftelegramm antworten muß, und
$T_{Bit}$ - die Zeitdauer eines Bits bei der jeweils eingestellten Datenrate.

Die Slot-Zeit wird damit so projektiert, daß sie mindestens doppelt so groß ist, wie es für die Netzwerkausdehnung eigentlich notwendig wäre. Die Slot-Zeit ist dann auch größer als die maximale Verzögerung in einer optischen Linie, zu welcher der optische Doppelring in Figur 8 aufgespalten wird, wenn beispielsweise eine Störung auf Segment 236 festgestellt und das Segment 236 abgekoppelt wird.

Um zu gewährleisten, daß bei erneutem Freischalten eines gesperrten Segments nach Wegfall der Störung keine Telegramme im Netzwerk umlaufen, müssen die beteiligten Koppelgeräte eine GAP-Abfrage eines aktiven Teilnehmers und danach das Verstreichen der halben Slot-Zeit abwarten. Nach Empfang eines GAP-Abfragetelegramms muß zusätzlich die halbe Slot-Zeit abgewartet werden, da bei einer GAP-Abfrage an einen im Netzwerk vorhandenen Teilnehmer dessen Antworttelegramm vor Ablauf der halben Slot-Zeit das Koppelgerät erreichen würde. Wenn kein Antworttelegramm nach einer GAP-Abfrage innerhalb der halben Slot-Zeit beim Koppelgerät eintrifft, muß es sich um eine GAP-Abfrage an einen nicht vorhandenen Teilnehmer gehandelt haben und es sind mit Sicherheit keine Telegramme im Netzwerk unterwegs. Durch diese Vorgehensweise werden bei der Ankopplung von Segmenten nach Wegfall der Störung kreisende Telegramme im optischen Doppelring vermieden.

Da die Koppelgeräte 221 ... 226 die Slot-Zeit nur bei GAP-Abfragen aktiver Teilnehmer an im Netzwerk nicht vorhandene Teilnehmer messen können, wird die HSA (Highest Station Adress) der aktiven Teilnehmer so projektiert, daß während des Betriebs GAP-Abfragen an mindestens einen nicht vorhandenen Teilnehmer erfolgen. Damit die Slot-Zeit ausschließlich anhand derartiger GAP-Abfragen ermittelt wird, erfolgen die Messungen nur zwischen zwei Aufruftelegrammen mit Acknowledge oder zwischen einem Aufruftelegramm mit Acknowledge und einem Token-Telegramm. Damit eine automatische Anpassung der gemessenen Slot-Zeiten bei Änderungen des Netzwerks erfolgt oder damit Fehlmessungen korrigiert werden können, werden die Slot-Zeit-Messungen fortwährend während des Betriebs vorgenommen. Die Messung erfolgt mit einem Slot-Zeit-Zähler, der die Anzahl der Bitzeiten zwischen dem Telegrammende eines Aufruftelegramms mit Acknowledge und dem Telegrammanfang des Folgetelegramms zählt. Die ermittelte Slot-Zeit wird in einem Slot-Zeit-Merker in der Slot-Zeit-Ermittlung 51 (siehe Figur 4) gespeichert. Als Anfangswert nach einem Neustart des Netzwerks wird der Slot-Zeit-Merker in den Koppelgeräten auf einen Default-Wert gesetzt, der dem höchsten einstellbaren Wert entspricht. Nach jeder gültigen Messung wird der Slot-Zeit-Merker mit dem neuen Meßwert überschrieben.

Aktive Teilnehmer sind dabei Teilnehmer, die sich im logischen Token-Ring des Netzwerks befinden und somit den Token annehmen und an den nächsten aktiven Teilnehmer im logischen Token-Ring weiterreichen können. Der jeweilige Token-Inhaber hat die Sendeberechtigung am Netzwerk. Im Gegensatz dazu können passive Teilnehmer den Token nicht aufnehmen. Sie senden lediglich Antworttelegramme, wenn sie dazu von einem Token-Inhaber durch ein Aufruftelegramm aufgefordert wurden.

**Patentansprüche**

1. Netzwerk mit mehreren Teilnehmern, das in zumindest drei Segmente (15, 16, 17) mit bidirektionaler Datenübertragung unterteilt ist, wobei ein erstes Segment (17) und ein zweites Segment (16) durch ein erstes Koppelgerät (23) und wobei das zweite Segment (16) und ein drittes Segment (15) durch ein zweites Koppelgerät (22) miteinander verbunden sind und das erste Koppelgerät (23) Mittel (63, 64, 73, 78) aufweist, um Verfälschungen eines Telegramms durch Störungen auf dem zweiten Segment (16) zu erkennen und um nach Erkennen eines Fehlers eine Weiterleitung auf dem zweiten Segment (16) empfangener Telegramme auf das erste Segment (17) zu sperren, **dadurch gekennzeichnet, daß** das zweite Koppelgerät (22) Mittel (64, 73) aufweist, um bei Erkennen einer Sperre der Weiterleitung von Telegrammen durch das erste Koppelgerät (23) die Weiterleitung auf dem zweiten Segment (16) empfangener Telegramme auf das dritte Segment (15) zu sperren.

2. Netzwerk nach Anspruch 1, **dadurch gekennzeichnet, daß** das erste Koppelgerät (23) Mittel (64, 73) aufweist, um nach Erkennen einer Störung auf dem zweiten Segment (16) eine Weiterleitung von Telegrammen auf das zweite Segment (16) mindestens für eine vorgebbare Zeitdauer, der sogenannten Mindestsegmentierzeit, zu sperren, daß das zweite Koppelgerät (22) eine Einrichtung (73) zur Überwachung von Sendeaktivitäten auf dem zweiten Segment (16) aufweist, die das Einhalten einer vorgebbaren Maximalruhezeit auf dem zweiten Segment (16) prüft und bei Überschreiten der Maximalruhezeit die Weiterleitung auf dem zweiten Segment (16) empfangener Telegramme auf das dritte Segment (15) sperrt, und daß die Mindestsegmentierzeit größer als die Maximalruhezeit ist.

3. Netzwerk nach Anspruch 1 oder 2, **dadurch gekennzeichnet, daß** die Weiterleitung durch das erste Koppelgerät erst nach Feststellen einer vorgebbaren Anzahl von Fehlern gesperrt wird.

4. Netzwerk nach einem der vorhergehenden Ansprüche, **dadurch gekennzeichnet, daß** die Mittel (78) zur Erkennung einer Telegrammverfälschung derart ausgebildet sind, daß ein Fehler erkannt wird, wenn in einem empfangenen Telegramm ein Signalpegel länger als eine vorgebbare Zeit erhalten bleibt.

5. Netzwerk nach Anspruch 4, **dadurch gekennzeichnet, daß** ein Fehler erkannt wird, wenn in einem empfangenen Telegramm der Signalpegel für 13 Bitzeiten in Folge auf einem Low-Pegel bleibt.

6. Netzwerk nach einem der vorhergehenden Ansprüche, **dadurch gekennzeichnet, daß** die Mittel (78) zur Erkennung einer Telegrammverfälschung derart ausgebildet sind, daß ein Fehler erkannt wird, wenn in einem empfangenen Telegramm mehr als eine vorgebbare Anzahl von Zeichen enthalten sind.

**7.** Netzwerk nach Anspruch 6, **dadurch gekennzeichnet, daß** ein Fehler erkannt wird, wenn in einem empfangenen Telegramm mehr als 262 Zeichen enthalten sind.

**8.** Netzwerk nach einem der vorhergehenden Ansprüche, **dadurch gekennzeichnet, daß** das zweite Koppelgerät (22) Mittel (69) aufweist zur Erganzung eines Telegramms, das von dem dritten Segment (15) auf das zweite Segment (16) weiterzuleiten ist, unabhängig von einer möglicherweise vorhandenen, auf dem dritten Segment (15) gültigen Kontrollinformation um eine auf dem zweiten Segment (16) gültige Kontrollinformation, die an das Telegramm angepaßt ist, das auf dem zweiten Segment (16) gesendet wird, so daß durch das an das zweite Segment angeschlossene erste Koppelgerät (23) die Kontrollinformation zur Beurteilung der Übertragungsqualität auf dem zweiten Segment (16) auswertbar ist.

**9.** Netzwerk nach Anspruch 8, **dadurch gekennzeichnet, daß** das erste Koppelgerät (23) Mittel (63) aufweist, um für ein auf dem zweiten Segment empfangenes Telegramm eine Kontrollinformation zu erzeugen, die erzeugte Kontrollinformation mit einer empfangenen Kontrollinformation zu vergleichen und bei Abweichen der Kontrollinformationen einen Fehler anzuzeigen.

**10.** Netzwerk nach Anspruch 9, **dadurch gekennzeichnet, daß** das erste Koppelgerät (23) Mittel (64, 71, 73, 78) aufweist, um bei Abweichen der Kontrollinformationen eine Weiterleitung auf dem zweiten Segment (16) empfangener Telegramme auf das dritte Segment (17) zu sperren.

**11.** Netzwerk nach einem der Ansprüche 8 bis 10, **dadurch gekennzeichnet, daß** die Kontrollinformation ein CRC, Cyclic Redundancy Check, -Prüfzeichen ist.

**12.** Netzwerk nach Anspruch 11, **dadurch gekennzeichnet, daß** das CRC-Prüfzeichen fünf Bit umfaßt.

**13.** Netzwerk nach Anspruch 11 oder 12, **dadurch gekennzeichnet, daß** das zweite Koppelgerät (22) Mittel aufweist zur Erganzung des Telegramms um ein zusätzliches Stop-Bit (34) und zum Senden der Kontrollinformation (35 ... 39) unmittelbar nach dem zusätzlichen Stop-Bit (34).

**14.** Netzwerk nach einem der vorhergehenden Ansprüche, **dadurch gekennzeichnet, daß** das zweite Koppelgerät (22) Mittel aufweist zur Aufhebung einer Sperrung der Weiterleitung, wenn eine Überprüfung der Übertragungsqualität auf dem zweiten Segment (16) durch Sondertelegramme, die über das zweite Segment (16) von dem ersten Koppelgerät (23) zu dem zweiten Koppelgerät (22) und umgekehrt übertragen werden, eine gute Übertragungsqualität ergibt.

**15.** Netzwerk nach Anspruch 14, **dadurch gekennzeichnet, daß** das erste und das zweite Koppelgerät Mittel aufweisen zur Ausführung eines Hand-Shake-Verfahrens zur Überprüfung der Übertragungsqualität auf dem zweiten Segment (16) durch Sondertelegramme, in dem

- das erste Koppelgerät (23) nach Ablauf der Mindestsegmentierzeit ein erstes Sondertelegramm (ST1) über das zweite Segment (16) zu dem zweiten Koppelgerät (22) sendet,
- das zweite Koppelgerät (22) bei fehlerfreiem Empfang des ersten Sondertelegrams (ST1) ein zweites Sondertelegramm (ST1) über das zweite Segment (16) zu dem ersten Koppelgerät (23) zurücksendet,
- das erste Koppelgerät (23) bei fehlerfreiem Empfang des zweifen Sondertelegramms (ST1) ein drittes Sondertelegramm (ST2) über das zweite Segment (16) zu dem zweiten Koppelgerät (22) sendet und
- das zweite Koppelgerät (22) bei fehlerfreiem Empfang des dritten Sondertelegramms (ST2) ein viertes Sondertelegramm (ST2) über das zweite Segment (16) zu dem ersten Koppelgerät (23) zurücksendet, und

daß Mittel vorhanden sind zur Einleitung des Hand-Shake-Verfahrens von neuem , wenn die Zeit zwischen Senden eines ersten Sondertelegramms und Empfang eines zurückgesendeten zweiten Sondertelegramms größer ist als eine vorgehbare Maximalzeit.

**16.** Koppelgerät zur Verbindung zweier Segmente in einem Netzwerk nach einem der vorhergehenden Ansprüche, wobei das Koppelgerät Mittel (63, 64, 73, 78) aufweist, um Verfälschungen des Telegramms durch Störungen auf dem zweiten Segment (16) zu erkennen und um nach Erkennen eines Fehlers eine Weiterleitung auf dem zweiten Segment (16) empfangener Telegramme auf das erste Segment (17) zu sperren, **dadurch gekennzeichnet**, das Koppelgerät Mittel (64, 73) aufweist, um nach Erkennen eines Fehlers auf dem zweiten Segment (16) eine Weiterleitung von Telegrammen auf das zweite Segment (16) mindestens für eine vorgebbare Zeitdauer, der sogenannten Mindestsegmentierzeit, zu sperren,

daß das Koppelgerät eine Einrichtung (84) zur Überwachung von Sendeaktivitäten auf dem zweiten Segment (16) aufweist, die das Einhalten einer vorgebbaren Maximalruhezeit auf dem zweiten Segment (16) prüft und bei Überschreiten der Maximalruhezeit die Weiterleitung auf dem zweiten Segment (16) empfangener Teiegramme auf das erste Segment (17) und das zweite Segment (16) sperrt, und

daß die Mindestsegmentierzeit größer als die Maximalruhezeit ist.

## Claims

1. Network, comprising a plurality of users, which is divided into at least three segments (15, 16, 17) having bidirectional data transmission, a first segment (17) and a second segment (16) being connected to one another through a first coupling device (23) and the second segment (16) and a third segment (15) being connected to one another through a second coupling device (22), and the first coupling device (23) comprising means (63, 64, 73, 78) for identifying corruption of a message due to disturbances on the second segment (16) and for blocking, following identification of a fault, a forwarding to the first segment (17) of messages received on the second segment (16), **characterized in that** the second coupling device (22) comprises means (64, 73) for blocking, upon identification of a block on the forwarding of messages by the first coupling device (23), the forwarding to the third segment (15) of messages received on the second segment (16).

2. Network according to claim 1, **characterized in that** the first coupling device (23) comprises means (64, 73) for blocking, following identification of a disturbance on the second segment (16), at least for a predefinable period of time, the so-called minimum segmentation time, a forwarding of messages to the second segment (16), **in that** the second coupling device (22) comprises a device (73), for monitoring transmission activities on the second segment (16), which checks the observance of a predefinable maximum idle time on the second segment (16) and, if the maximum idle time is exceeded, blocks the forwarding to the third segment (15) of messages received on the second segment (16), and **in that** the minimum segmentation time is greater than the maximum idle time.

3. Network according to either of claims 1 or 2, **characterized in that** the forwarding is blocked by the first coupling device only after the ascertainment of a predefinable number of faults.

4. Network according to any one of the preceding claims, **characterized in that** the means (78) for identifying the corruption of a message are of such design that a fault is identified if, in a received message, a signal level is maintained for longer than a predefinable period of time.

5. Network according to claim 4, **characterized in that** a fault is identified if, in a received message, the signal level remains on a low level for 13 bit-times in succession.

6. Network according to any one of the preceding claims, **characterized in that** the means (78) for identifying the corruption of a message are of such design that a fault is identified if a received message contains more than a predefinable number of characters.

7. Network according to claim 6, **characterized in that** a fault is identified if a received message contains more than 262 characters.

8. Network according to any one of the preceding claims, **characterized in that** the second coupling device (22) comprises means (69) for supplementing a message, which is to be forwarded from the third segment (15) to the second segment (16), irrespective of a possibly existing check information item that is valid on the third segment (15), by a check information item which is valid on the second segment (16) and is adapted to the message that is transmitted on the second segment (16), so that the check information item can be evaluated by the first coupling device (23) connected to the second segment for the purpose of assessing the transmission quality on the second segment (16).

9. Network according to claim 8, **characterized in that** the first coupling device (23) comprises means (63) for the purpose of generating a check information item for a message received on the second segment, comparing the generated check information item with a received check information item and, in the case of variance of the check information items, indicating a fault.

10. Network according to claim 9, **characterized in that** the first coupling device (23) comprises means (64, 71, 73, 78) for blocking a forwarding to the third segment (17) of messages received on the second segment (16) in the case of variance of the check information items.

11. Network according to any one of claims 8 to 10, **characterized in that** the check information item is a CRC, Cyclic Redundancy Check, character.

12. Network according to claim 11, **characterized in that** the CRC check character comprises five bits.

13. Network according to either of claims 11 or 12, **characterized in that** the second coupling device (22) comprises means for supplementing the message by an additional stop bit (34) and for the transmission of the check information item (35 ... 39) immediately after the additional stop bit (34).

14. Network according to any one of the preceding claims, **characterized in that** the second coupling device (22) comprises means for cancelling a block on forwarding if a check of the transmission quality on the second segment (16) by means of special messages, transmitted via the second segment (16) from the first coupling device (23) to the second coupling device (22) and vice versa, demonstrates a good transmission quality.

15. Network according to claim 14, **characterized in that** the first and the second coupling devices comprise means for performing a handshake procedure for checking the transmission quality on the second segment (16) through special messages, in which

- the first coupling device (23), following expiry of the minimum segmentation time, transmits a first special message (ST1) to the second coupling device (22) via the second segment (16),
- the second coupling device (22), in the case of fault-free receipt of the first special message (ST1), transmits a second special message (ST1) back to the first coupling device (23) via the second segment (16),
- the first coupling device (23), in the case of fault-free receipt of the second special message (ST1), transmits a third special message (ST2) to the second coupling device (22) via the second segment (16), and
- the second coupling device (22), in the case of fault-free receipt of the third special message (ST2), transmits a fourth special message (ST2) back to the first coupling device (23) via the second segment (16), and

**in that** means are provided for restarting the handshake procedure if the time between transmission of a first special message and receipt of a returned second special message is greater than a predefinable maximum time.

16. Coupling device for connecting two segments in a network according to any one of the preceding claims, the coupling device comprising means (63, 64, 73, 78) for identifying corruptions of the message due to disturbances on the second segment (16) and for blocking, following identification of a fault, a forwarding to the first segment (17) of messages received on the second segment (16), **characterized in that** the coupling device comprises means (64, 73) for blocking, following identification of a fault on the second segment (16), at least for a predefinable period of time, the so-called minimum segmentation time, a forwarding of messages to the second segment (16), **in that** the coupling device comprises a device (84), for monitoring transmission activities on the second segment (16), which checks the observance of a predefinable maximum idle time on the second segment (16) and, if the maximum idle time is exceeded, blocks the forwarding to the first segment (17) and to the second segment (16) of messages received on the second segment (16), and **in that** the minimum segmentation time is greater than the maximum idle time.


**Revendications**

1. Réseau avec plusieurs utilisateurs qui est divisé en au moins trois segments (15, 16, 17) avec transmission de données bidirectionnelle, un premier segment (17) et un deuxième segment (16) étant reliés par un premier appareil de connexion (23), le deuxième segment (16) et un troisième segment (15) étant reliés par un deuxième appareil de connexion (22) et le premier appareil de connexion (23) comportant des moyens (63, 64, 73, 78) pour détecter des altérations d'un télégramme par des perturbations sur le deuxième segment (16) et pour, après la détection d'une erreur, bloquer une retransmission de télégrammes reçus sur le deuxième segment (16) vers le premier segment (17), **caractérisé par le fait que** le deuxième appareil de connexion (22) comporte des moyens (64, 73) pour, lors de la détection d'un blocage de la retransmission de télégrammes par le premier appareil de connexion (23), bloquer la retransmission de télégrammes reçus sur le deuxième segment (16) vers le troisième segment (15).

2. Réseau selon la revendication 1, **caractérisé par le fait que** le premier appareil de connexion (23) comporte des moyens (64, 73) pour, après la détection d'une perturbation sur le deuxième segment (16), bloquer une retransmission de télégrammes vers le deuxième segment (16) au moins pour une durée pouvant être prédéterminée et appelée temps de segmentation minimal, le deuxième appareil de connexion (22) comporte un dispositif (73) qui est destiné à surveiller des activités d'émission sur le deuxième segment (16), qui teste le respect d'un temps de repos maximal pouvant être prédéterminé sur le deuxième segment (16) et qui, lors du dépassement du temps de repos maximal, bloque la retransmission de télégrammes reçus sur le deuxième segment (16) vers le troisième segment (15), et le temps de segmentation minimal est supérieur au temps de repos maximal.

3. Réseau selon la revendication 1 ou 2, **caractérisé par le fait que** la retransmission par le premier appareil de connexion n'est bloquée qu'après avoir constaté un nombre pouvant être prédéterminé d'erreurs.

4. Réseau selon l'une des revendications précédentes, **caractérisé par le fait que** les moyens (78) pour la détection d'une altération de télégramme sont conçus de telle sorte qu'une erreur est détectée lorsqu'un niveau de signal dans un télégramme reçu est conservé plus longtemps qu'un temps pouvant être prédéterminé.

5. Réseau selon la revendication 4, **caractérisé par le fait qu'**une erreur est détectée lorsque le niveau de signal dans un télégramme reçu reste à un niveau bas pour 13 durées de bits à la suite.

6. Réseau selon l'une des revendications précédentes, **caractérisé par le fait que** les moyens (78) pour la détection d'une altération de télégramme sont conçus de telle sorte qu'une erreur est détectée lorsqu'un télégramme reçu contient plus d'un certain nombre, pouvant être prescrit, de caractères.

7. Réseau selon la revendication 6, **caractérisé par le fait qu'**une erreur est détectée lorsqu'un télégramme reçu contient plus de 262 caractères.

8. Réseau selon l'une des revendications précédentes, **caractérisé par le fait que** le deuxième appareil de connexion (22) comporte des moyens (69) pour compléter un télégramme qui est à retransmettre du troisième segment (15) au deuxième segment (16), indépendamment d'une information de contrôle éventuellement présente et valable sur le troisième segment (15), avec une information de contrôle qui est valable sur le deuxième segment (16) et qui est adaptée au télégramme qui est émis sur le deuxième segment (16) de telle sorte que le premier appareil de connexion (23) raccordé au deuxième segment peut évaluer l'information de contrôle pour juger de la qualité de transmission sur le deuxième segment (16).

9. Réseau selon la revendication 8, **caractérisé par le fait que** le premier appareil de connexion (23) comporte des moyens (63) pour produire une information de contrôle pour un télégramme reçu sur le deuxième segment, pour comparer l'information de contrôle produite à une information de contrôle reçue et pour indiquer une erreur si les informations de contrôle sont différentes.

10. Réseau selon la revendication 9, **caractérisé par le fait que** le premier appareil de connexion (23) comporte des moyens (64, 71, 73, 78) pour bloquer une retransmission de télégrammes reçus sur le deuxième segment (16) vers le troisième segment (17) si les informations de contrôle sont différentes.

11. Réseau selon l'une des revendications 8 à 10, **caractérisé par le fait que** l'information de contrôle est un caractère de contrôle CRC, Cyclic Redundancy Check.

12. Réseau selon la revendication 19, **caractérisé par le fait que** le caractère de contrôle CRC comprend cinq bits.

13. Réseau selon la revendication 11 ou 12, **caractérisé par le fait que** le deuxième appareil de connexion (22) comporte des moyens pour compléter le télégramme avec un bit d'arrêt supplémentaire (34) et pour émettre l'information de contrôle (35 à 39) juste après le bit d'arrêt supplémentaire (34).

14. Réseau selon l'une des revendications précédentes, **caractérisé par le fait que** le deuxième appareil de connexion (22) comporte des moyens pour éliminer un blocage de la retransmission lorsqu'une vérification de la qualité de transmission sur le deuxième segment (16) par des télégrammes spéciaux qui sont transmis via le deuxième segment (16) du premier appareil de connexion (23) au deuxième appareil de connexion (22) et inversement donne une bonne qualité de transmission.

**15.** Réseau selon la revendication 14, **caractérisé par le fait que**

le premier et le deuxième appareil de connexion comportent des moyens pour la réalisation d'un procédé d'établissement de liaison dit handshaking pour la vérification de la qualité de transmission sur le deuxième segment (16) par des télégrammes spéciaux,

- le premier appareil de connexion (23) émettant après expiration du temps de segmentation minimal un premier télégramme spécial (ST1) via le deuxième segment (16) vers le deuxième appareil de connexion (22),
- le deuxième appareil de connexion (22) renvoyant, lors d'une réception sans erreur du premier télégramme spécial (ST1), un deuxième télégramme spécial (ST1) via le deuxième segment (16) vers le premier appareil de connexion (23),
- le premier appareil de connexion (23) émettant, lors d'une réception sans erreur du deuxième télégramme spécial (ST1), un troisième télégramme spécial (ST2) via le deuxième segment (16) vers le deuxième appareil de connexion (22), et
- le deuxième appareil de connexion (22) renvoyant, lors dune réception sans erreur du troisième télégramme spécial (ST2), un quatrième télégramme spécial (ST2) via le deuxième segment (16) vers le premier appareil de connexion (23),

et des moyens sont prévus pour déclencher à nouveau le procédé d'établissement de liaison lorsque le temps entre l'émission d'un premier télégramme spéciat et la réception d'un deuxième télégramme spécial renvoyé est supérieur à un temps maximal pouvant être prescrit.

**16.** Appareil de connexion pour relier deux segments dans un réseau selon l'une des revendications précédentes, l'appareil de connexion comportant des moyens (63, 64, 73, 78) pour détecter des altérations du télégramme par des perturbations sur le deuxième segment (16) et pour, après la détection d'une erreur, bloquer la retransmission de télégrammes reçus sur le deuxième segment (16) vers le premier segment (17), **caractérisé par le fait que**

l'appareil de connexion comporte des moyens (64, 73) pour, après la détection d'une erreur sur le deuxième segment (16), bloquer une retransmission de télégrammes sur le deuxième segment (16) au moins pour une durée pouvant être prédéterminée et appelée temps de segmentation minimal,

l'appareil de connexion comporte un dispositif (84) qui est destiné à surveiller des activités d'émission sur le deuxième segment (16), qui teste le respect d'un temps de repos maximal pouvant être prédéterminé sur le deuxième segment (16) et qui, lors du dépassement du temps de repos maximal, bloque la retransmission de télégrammes reçus sur le deuxième segment (16) vers le premier segment (17) et le deuxième segment (16), et

le temps de segmentation minimal est supérieur au temps de repos maximal.

# FIG 1

# FIG 2

## FIG 3

## FIG 4

FIG 5

FIG 6

FIG 7

FIG 8